# EUROPÄISCHE PATENTSCHRIFT

(11) **EP 2 847 542 B1**
(45) Veröffentlichungstag und Bekanntmachung des Hinweises auf die Patenterteilung: **23.03.2016**
(21) Anmeldenummer: 12753918.7
(22) Anmeldetag: 07.08.2012
(51) Int. Cl.: G01B 11/00, G01B 11/03, G01B 21/04

(54) **VORRICHTUNG MIT INTERNER OPTISCHER REFERENZ**
DEVICE WITH INTERNAL OPTICAL REFERENCE
DISPOSITIF DOTÉ D'UNE RÉFÉRENCE OPTIQUE INTERNE

(43) Veröffentlichungstag der Anmeldung: 18.03.2015
(73) Patentinhaber: Carl Zeiss Industrielle Messtechnik GmbH, 73447 Oberkochen (DE)
(72) Erfinder: ENGEL, Thomas, 73432 Aalen (DE)
(74) Vertreter: Witte, Weller & Partner Patentanwälte mbB
(86) Internationale Anmeldenummer: PCT/EP2012/065479
(87) Internationale Veröffentlichungsnummer: WO 2014/023346

(56) Entgegenhaltungen:
- EP-A1- 2 068 113
- WO-A1-00/42387
- DE-A1- 19 816 270

## Beschreibung

Die vorliegende Erfindung betrifft eine Vorrichtung, insbesondere ein Koordinatenmessgerät, zum Inspizieren eines Messobjekts, mit einer Werkstückaufnahme zur Aufnahme des Messobjekts, mit einem einen optischen Sensor tragenden Messkopf, wobei der Messkopf und die Werkstückaufnahme relativ zueinander verfahrbar sind, wobei der optische Sensor ein Objektiv und eine Kamera aufweist, die dazu ausgebildet ist, ein Bild des Messobjekts durch das Objektiv aufzunehmen, wobei das Objektiv eine Lichteintrittsöffnung und eine Lichtaustrittsöffnung aufweist, wobei das Objektiv eine Vielzahl von Linsengruppen aufweist, die in dem Objektiv zwischen der Lichteintrittsöffnung und der Lichtaustrittsöffnung hintereinander entlang einer Längsachse des Objektivs angeordnet sind.

Eine solche Vorrichtung zeigt beispielsweise die Druckschrift WO 99/53268 A1.

Des Weiteren betrifft die vorliegende Erfindung ein Verfahren zum Kalibrieren einer Vorrichtung zum Inspizieren eines Messobjekts.

Die Verwendung von optischen Sensoren in Verbindung mit Koordinatenmessgeräten ermöglicht in vielen Fällen eine sehr schnelle Messung von geometrischen Eigenschaften eines Messobjekts. Ein Nachteil bekannter Koordinatenmessgeräte mit optischen Sensoren besteht bislang darin, dass die optischen Sensoren auf bestimmte Messaufgaben und bestimmte Werkstückeigenschaften begrenzt sind. Die optischen Sensoren sind in der Regel für eine bestimmte Art von Messaufgabe optimiert, etwa im Hinblick auf die erreichbare Messgenauigkeit oder den Messbereich. Probleme können beispielsweise Werkstücke machen, die parallel zur optischen Achse des Sensors große Höhendifferenzen aufweisen. Teilweise werden verschiedene optische und/oder taktile Sensoren verwendet, um flexibel auf verschiedene Messanforderungen reagieren zu können, wobei die einzelnen Sensoren jeweils nur einen Teil der gesamten Messaufgabe übernehmen. In der Regel ist jeder einzelne Sensor auf eine bestimmte Messaufgabe hin optimiert. Vor allem optische Sensoren besitzen daher eine jeweils individuelle Optik, die für einen bestimmten Einsatzzweck gut geeignet und für andere Zwecke weniger gut geeignet ist.

Dabei hat in regelmäßigen Intervallen eine Überprüfung einer solchen Optik zu erfolgen. Dies dient dazu, etwaige Änderungen in der Positionierung der optischen Elemente relativ zueinander, sei es durch physische äußere Einflüsse, wie bspw. Kollisionen, oder bspw. aufgrund von thermischen Einflüssen, zu erfassen und ggf. zu kompensieren.

Werden Optiken mit variablem Abbildungsmaßstab verwendet, erfolgt die Verstellung der optischen Elemente typischerweise anhand von Stellkurven. Dabei kann die Kopplung der Linsen entweder über eine Kurvenscheibe erfolgen, oder aber die Position der optischen Elemente relativ zueinander mittels getrennter Antriebe eingestellt werden. In der Regel verlässt man sich dabei auf die Stellgenauigkeit der Stellkurven bzw. der Antriebe. Auch diese können sich jedoch über die Zeit ändern.

Um bspw. eingestellte Vergrößerungen oder überhaupt das Abbildungsverhalten einer Optik zu überprüfen, kann zu bestimmten Prüfintervallen ein Prüfkörper mit einer bekannten Struktur in Geometrie und/oder Größe unter die Optik bzw. das Objektiv gelegt werden und eine Größe der abgebildeten Struktur auf der Kamera vermessen werden. Auf diese Weise kann dann der gesamte Strahlengang in Bezug auf die Vergrößerung, den Abbildungsmaßstab oder überhaupt die optischen Eigenschaften des Objektivs kalibriert werden. Im Prinzip ist es dann auch möglich, die Vergrößerung oder den Abbildungsmaßstab nachzustellen, wenn das Bild um mehr als eine Schrittweite des Antriebes von dem gewünschten Abbildungsmaßstab abweicht.

Typische Kalibrierobjekte sind die Glasträger, die ggf. auf der Rückseite lackiert sind. Die Struktur ist dann auf der Oberseite bzw. Vorderseite aufgebracht. Kalibrierobjekte werden in der Vorrichtung platziert und dann vermessen.

Ein solches Kalibrierverfahren, das mit dem Platzieren eines Messobjekts arbeiten kann, ist bspw. in der Druckschrift DE 10 2009 054 703 A1 genannt.

Da ein Anwender mit den Kalibrierobjekten umgehen muss, besteht die Gefahr, dass diese verdrecken oder gar verkratzen. Zudem muss ein Nutzer den Aufwand der Kalibrierung selbst vornehmen und typischerweise auch begleiten, was Arbeitszeit kostet.

Es ist eine Aufgabe der vorliegenden Erfindung, die voranstehend genannten Nachteile zu beseitigen und verbesserte Möglichkeiten zum Kalibrieren in einer Vorrichtung zum Inspizieren eines Messobjekts bereitzustellen.

Erfindungsgemäß wird daher vorgeschlagen, die eingangs genannte Vorrichtung dahingehend weiterzubilden, dass die Vorrichtung des Weiteren ein Reflexionselement und eine Kalibrieranordnung aufweist, wobei das Reflexionselement in einen Durchlassobjektiv auf die Kamera verlaufenden Strahlengang einbringbar ist, wobei die Kalibrieranordnung mittels des Reflexionselements in den Strahlengang auf die Kamera eingekoppelt ist.

Unter einem "Reflexionselement" ist im allgemeinen Sinn ein optisches Element zu verstehen, dass einfallendes Licht zu einem gewissen Anteil reflektiert. Im einfachsten Sinne kann dies ein Spiegel sein, d.h. ein optisches Element, das einen Reflexionsgrad von nahezu oder genau 100 % aufweist. Es kann aber bspw. auch vorgesehen sein, dass das Reflexionselement durch einen Strahlteller gebildet wird, der einfallendes Licht zu einem gewissen Prozentsatz reflektiert. Der Strahlteiler kann dabei eine Strahlteilung nach Wellenlänge, Polarisation und/oder Intensität vornehmen. Bei einen nach Intensität teilenden Strahlteiler kann etwa vorgesehen sein, dass dieser einfallendes Licht zu einen gewissen Anteil, bspw. 50 %, transmittiert und zu einem gewissen Anteil, bspw. ebenfalls 50 %, reflektiert. Insbesondere kann in einem Beispiel das Reflexionselement durch die reflektierende Rückseite eines Strahlteilers gebildet sein.

Insbesondere wird die Kalibrieranordnung mittels des Reflexionselements optisch in den Strahlengang auf die Kamera eingekoppelt. Insbesondere erfolgt dies koaxial zu der Längsrichtung oder einer optischen Achse des Objektivs bzw. einer optischen Achse der Vielzahl von Linsengruppen des Objektivs.

Auf diese Weise wird es möglich, die Kalibrieranordnung als Bestandteil der Vorrichtung, insbesondere innerhalb eines Gehäuses der Vorrichtung, geschützt vorzuhalten. Die Kalibrieranordnung wird dann wahlweise durch Einbringen des Reflexionselements in den Strahlengang "aktiv" geschaltet. Durch Beleuchten der Kalibrieranordnung, bspw. mittels eines ohnehin in der Vorrichtung vorgesehenen Auflichts oder einer eigenen Beleuchtungseinrichtung der Kalibrieranordnung kann die Kamera Bilder von einem in der Kalibrieranordnung vorgesehenen Kalibriernormal aufnehmen und diese zur Kalibrierung des Objektivs verwenden.

Auf diese Weise kann die Prüfung der Kalibrierung vollautomatisch stattfinden. Beispielsweise ist es möglich, dass eine Kalibrierung mittels der vorgeschlagenen Vorrichtung in Pausen oder nachts durchgeführt wird. Die Vorrichtung müsste dabei nicht auf eine bestimmte Position verfahren werden und es muss auf der Werkstückaufnahme nicht extra ein Kalibriernormal aufgebracht werden. Ein Schutz des Kalibriernormals innerhalb eines Gehäuses der Vorrichtung trägt zur Vermeidung von Beschädigungen und/oder Verschmutzungen des Kalibriernormals bei. Dabei ist zu beachten, dass Kalibriernormale in der Regel relativ teuer sind und ihre Wiederanschaffung daher mit hohen Kosten verbunden ist. Zu kalibrierende Größen können beispielsweise der Abbildungsmaßstab oder die Vergrößerung, die Abbildungsgüte, beispielsweise anhand der Bestimmung von Abbildungskennzahlen sein. Eine nachfolgende Optimierung kann etwa auf minimierte Abbildungsfehler, oder auch gezielt vorzuhaltende Abbildungsfehler erfolgen.

Die zur Kalibrierung notwendige Bildverarbeitung der von dem Kalibriernormal aufgenommenen Bilder kann unmittelbar in der Kamera erfolgen oder auch in nachgeschalteten Bildverarbeitungssystemen, beispielsweise Grafikkarten. Auf diese Weise werden Abweichungen von den erwarteten optischen Eigenschaften, bspw. dem Abbildungsmaßstab, festgestellt, so dass Korrekturen in der Optik bzw. dem Objektiv oder in den Steuerkurven vorgenommen werden können.

Weiter wird erfindungsgemäß ein Verfahren gemäß Anspruch 18 vorgeschlagen.

Das erfindungsgemäße Verfahren stellt dieselben Vorteile wie die Vorrichtung gemäß dem ersten Aspekt der Erfindung bereit. In einer Ausgestaltung des Verfahrens kann gegebenenfalls anschließend an die Kalibrierung ein Schritt des Verstellens der Vorrichtung erfolgen. Dies kann geschehen, um die geforderte Bildqualität zu erreichen oder die gewünschten Abbildungsfehler vorzuhalten. Anschließend können die Schritte des Erfassens und des Kalibrierens erneut durchgeführt werden.

Die eingangs gestellte Aufgabe wird daher vollkommen gelöst.

In einer Ausgestaltung der Vorrichtung kann vorgesehen sein, dass das Reflexionselement zwischen zwei Linsengruppen der Vielzahl von Linsengruppen in den Strahlengang einbringbar ist.

Auf diese Weise wird es daher möglich, die Kalibrieranordnung in das Objektiv einzukoppeln. Die Kalibrierung kann auf diese Weise vollautomatisch innerhalb der Vorrichtung durchgeführt werden. Eine äußere manuelle Einflussnahme zur Durchführung der Kalibration ist nicht mehr notwendig.

In einer weiteren Ausgestaltung der Vorrichtung kann vorgesehen sein, dass die Vielzahl von Linsengruppen mindestens eine parallel zur Längsrichtung bewegbare Linsengruppe aufweist, wobei das Reflexionselement objektseitig aller parallel zu der Längsrichtung bewegbaren Linsengruppen in den Strahlengang einbringbar ist.

Beispielsweise in einem Objektiv mit variabler Vergrößerung sind mehrere Linsengruppen bewegbar ausgestaltet, um die Vergrößerung bzw. den Abbildungsmaßstab geeignet einzustellen. Bei der Kalibration soll dann in der Regel insbesondere die Verstellung dieser bewegbaren Linsengruppe überprüft werden. Insofern ist das Reflexionselement objektseitig aller bewegbaren Linsengruppen anzuordnen, so dass diese sich in dem Strahlengang von der Kamera auf die Kalibrieranordnung befinden. Auf diese Weise kann eine Überprüfung aller bewegbaren Linsengruppen erfolgen. Etwaige feststehende Linsengruppen, die weiter objektseitig von dem Reflexionselement angeordnet sind, können in der Kalibrieranordnung vorgesehen sein oder durch diese simuliert werden, wie im Folgenden noch dargestellt wird.

In einer weiteren Ausgestaltung der Vorrichtung kann vorgesehen sein, dass die Kalibrieranordnung mindestens ein reales Kalibrierobjekt aufweist.

Es wird somit ein tatsächliches, körperliches Kalibrierobjekt in der Kalibrieranordnung vorgesehen. Die Beleuchtung dieses Kalibrierobjekts kann mittels eines ohnehin in der Vorrichtung folgenden Auflichtes über das Reflexionselement erfolgen, oder das Kalibrierobjekt kann mittels einer eigenen Beleuchtungseinrichtung der Kalibrieranordnung beleuchtet werden, insbesondere von hinten beleuchtet werden. Auf diese Weise wird es möglich, den optischen Weg auf ein Kalibrierobjekt innerhalb der Kalibrieranordnung so nachzustellen, als würde ein Kalibrierobjekt auf der Werkstückaufnahme aufgenommen werden.

In einer weiteren Ausgestaltung der Vorrichtung kann vorgesehen sein, dass die Kalibrieranordnung eine Kalibrierlinsenbaugruppe aufweist, wobei die Kalibrierlinsenbaugruppe in ihren optischen Eigenschaften den objektseitig des Reflexionselements angeordneten Linsengruppen entspricht.

Beispielsweise kann es vorgesehen sein, dass alle bewegbaren Linsengruppen der Vielzahl von Linsengruppen bildseitig des Reflexionselements angeordnet sind, objektseitig aber noch eine oder mehrere feststehende Linsengruppen angeordnet sind. Diese finden sich dann nicht im Strahlengang von der Kamera auf die Kalibrieranordnung bzw. das Kalibrierobjekt. Um den optischen Weg jedoch trotz allem nachzustellen, ist in der Kalibrieranordnung eine Kalibrierlinsenbaugruppe vorzusehen, die dieselben optischen Eigenschaften aufweist, so dass das Kalibrierobjekt auf die Kamera derart abgebildet wird, als wäre es auf der Werkstückaufnahme positioniert.

In einer weiteren Ausgestaltung der Vorrichtung kann vorgesehen sein, dass die Kalibrieranordnung mehrere reale Kalibrierobjekte aufweist, wobei die Kalibrieranordnung mindestens einen Kalibrierstrahlteiler aufweist, und wobei der mindestens eine Kalibrierstrahlteiler derart angeordnet ist, dass die Strahlengänge aller realen Kalibrierobjekte auf das Reflexionselement überlagert sind.

In einer weiteren Ausgestaltung kann dabei vorgesehen sein, dass in dem Strahlengang des mindestens einen realen Kalibrierobjekts eine Verzögerungsstrecke mittels zweier Verzögerungsstrahlteiler eingekoppelt ist.

Des Weiteren kann vorgesehen sein, dass in jedem oder mindestens einem Strahlengang zu einem realen Kalibrierobjekt oder in der optischen Verzögerungsstrecke ein Shutterelement angeordnet ist, um den entsprechenden Strahlengang wahlweise zu blockieren.

Hat das Objektiv bzw. die Optik der Vorrichtung mehr als einen Arbeitsabstand, so müssen für die zu kalibrierenden Arbeitsabstände entweder mehrere Kalibrierobjekte in den unterschiedlichen gewünschten Abständen innerhalb der Kalibrieranordnung aufgestellt sein und die Lichtwege z.B. über den Kalibrierstrahlteiler überlagert werden. Zu dem zu überprüfenden Arbeitsabstand wird dann ggf. nur die Beleuchtung des zugehörigen Kalibrierobjekts eingeschaltet. Im Falle der Verwendung einer Auflichtbeleuchtung würden sich alle Bilder zunächst überlagern, wobei nur für das Kalibrierobjekt in dem mittels des Objektivs eingestellten Arbeitsabstands die Ausleuchtung stimmt. Dadurch ist nur das Bild des scharf eingestellten Kalibrierobjekts mit hoher Abbildungsgüte und hinreichender Helligkeit auf der Kamera abgebildet. Falls eine solche Trennung über scharfe und unscharfe Abbildungen nicht ausreicht, kann mittels der Shutterelemente in den Strahlengängen ein optisches Schalten nur eines Kalibrierobjekts in dem zu überprüfenden Arbeitsabstand durchgeführt werden.

Unter einem "Arbeitsabstand" kann dabei entweder ein "mechanischer Arbeitsabstand", d.h. ein lichter Abstand zwischen der ersten Störkontur des Objektivs und der Oberfläche des Messobjekts" oder ein "optischer Arbeitsabstand", d.h. ein lichter Abstand zwischen dem ersten optischen Element des Objektivs und einer Fokusebene des Objektivs verstanden werden.

Statt mehrerer Kalibrierobjekte können zwischen dem Kalibrierobjekt und der Kalibrierlinsenbaugruppe auch ein oder mehrere optische Verzögerungsleitungen vorgesehen sein, die dann die unterschiedlichen Arbeitsabstände nachstellen. Auch hier kann es notwendig sein, dass in den einzelnen Lichtwegen mit einzelnen Verzögerungsleitungen Shutterelemente vorgesehen sind, die wieder nur den jeweils zu prüfenden Arbeitsabstand freigeben und alle anderen Wege optisch blockieren.

In einer weiteren Ausgestaltung der Vorrichtung kann vorgesehen sein, dass die Kalibrieranordnung mindestens ein optisches Bildspeicherelement aufweist, wobei das optische Bildspeicherelement ein holografisches optisches Element oder ein diffraktives optisches Element ist.

Auf diese Weise kann vorgesehen sein, dass mittels des optischen Bildspeicherelements und dessen Beleuchtung genau ein optisches Feld erzeugt wird, wie es auch objektseitig des Reflexionselements erzeugt worden wäre, wenn ein Kalibriernormal auf der Werkstückaufnahme angeordnet gewesen wäre.

In einer weiteren Ausgestaltung der Vorrichtung kann vorgesehen sein, dass auf dem optischen Bildspeicherelement ein optisches Feld gespeichert ist, das dem optischen Feld oder der Abbildung eines objektseitig des Reflexionselements angeordneten Kalibrierobjekts, insbesondere einem durch die objektseitig des Reflexionselements, insbesondere in der Objektebene, angeordneten Linsengruppen abgebildeten Kalibrierobjekts, entspricht.

Die Begriffe "bildseitig" und "objektseitig" beziehen sich dabei auf den Aufbau der Vorrichtung und des Objektivs, wenn ein tatsächlich vorhandenes Messobjekt auf der Werkstückaufnahme inspiziert wird.

Auf diese Weise wird es möglich, die Kalibrieranordnung platzsparend aufzubauen. Das optische Feld wird dabei entweder auf einem holografischen optischen Element oder einem diffraktiven optischen Element gespeichert, insbesondere kann ein computergeneriertes Hologramm (CGH) vorgesehen sein. Insbesondere wird es hierdurch möglich, auch große Arbeitsabstände in der Kalibrieranordnung zu simulieren, obwohl diese tatsächlich deutlich geringere Dimensionen als die Arbeitsabstände aufweist.

In einer weiteren Ausgestaltung der Vorrichtung kann vorgesehen sein, dass die Kalibrieranordnung ein optisches Bildspeicherelement aufweist, das ein holografisches optisches Element ist, wobei auf dem optischen Bildspeicherelement eine Mehrzahl optischer Felder wellenlängenabhängig oder beleuchtungswinkelabhängig gespeichert ist.

Des Weiteren kann an einer Ausgestaltung der Vorrichtung vorgesehen sein, dass die Kalibrieranordnung mehrere optische Bildspeicherelemente aufweist, wobei die Kalibrieranordnung mindestens einen Kalibrierstrahlteiler aufweist, und wobei der mindestens eine Kalibrierstrahlteiler derart angeordnet ist, dass die Strahlengänge aller optischen Bildspeicherelemente auf das Reflexionselement überlagert sind.

Wenn das von dem Objektiv mehr als ein Arbeitsabstand überprüft werden soll, können auf diese Weise auf einer Hologrammplatte mehrere optische Felder gespeichert werden. Grundsätzlich kann vorgesehen sein, dass sich diese mehreren optischen Felder dann überlagern, wenn sie mit einer Beleuchtungseinrichtung bestrahlt werden. Unter Umständen kann dies bereits ausreichend sein, wenn dann nur eines dieser optischen Felder scharf abgebildet wird. Alternativ können die optischen Felder jedoch auch mit verschiedenen Lichtquellen bzw. Beleuchtungseinheiten aus unterschiedlichen Richtungen und/oder mit unterschiedlichen Farben aufgenommen werden. Weiter alternativ können selbstverständlich auch mehrere separate Hologramme angefertigt werden, die jeweils einen Arbeitsabstand repräsentieren. Für farbabhängige Kalibriervorgänge kann auch vorgesehen sein, für jede Farbe ein eigenes Hologramm aufzunehmen, die dann einzeln ausgelesen werden.

Bei dem Kalibrierobjekt oder dem auf dem Bildspeicherelement gespeicherten Objekt kann es sich um eines von mehreren möglichen Objekten handeln. Zum einen sind Amplitudenobjekte mögliche, die ein- zwei oder dreidimensionale geometrische Objekte enthalten, also z.B. Gittermuster, Quadrate, Kreise in positiver oder negativer Darstellung. Ferner können auch Phasenobjekte verwendet werden, um Strukturen auf dem Bildaufnahmesensor zu erzeugen. Auch Mischobjekte aus Amplituden- und Phasenobjekten, so wie sie auch in der Lithografie Anwendung finden, können verwendet werden. Auch Strukturen unterhalb der Auflösungsgrenze sind möglich, um so z.B. Abbildungen von quasi idealen Punktbildern zu erhalten, die für die Bestimmung von Kennzahlen für die Abbildungsgüte verwendet werden können. Auch regelmäßige periodische und nichtperiodische Anordnungen sind möglich, um die Abbildungseigenschaften über das Gesichtsfeld der Optik und der Kamera zu bestimmen.

In einer weiteren Ausgestaltung der Vorrichtung kann vorgesehen sein, dass das Objektiv eine Blende und mindestens vier Linsengruppen aufweist, dass eine erste Linsengruppe die am weitesten objektseitig angeordnete Linsengruppe ist und feststehend ausgebildet ist, dass mindestens eine zweite Linsengruppe und eine dritte Linsengruppe relativ zu der ersten Linsengruppe entlang der Längsachse verschiebbar sind, und dass das Reflexionselement zwischen die erste Linsengruppe und die zweite Linsengruppe einbringbar ist.

Auf diese Weise kann bspw. ein Objektiv mit variablem Abbildungsmaßstab bereitgestellt werden. Die erste objektseitig angeordnete Linsengruppe steht dabei fest. Zwischen der ersten Linsengruppe und den weiteren bewegbaren Linsengruppen ist ein Bauraum vorgesehen, in dem das Reflexionselement einbringbar ist. Das Licht läuft dann zwischen der Kamera und der Kalibrieranordnung durch die bewegbaren Linsengruppen zwischen der Kamera und der Kalibrieranordnung. Auf diese Weise kann die von der Kalibrieranordnung auf die Kamera eingestrahlte Intensitätsverteilung der Kalibrierstruktur aufgenommen und nachfolgend mit einer Bildverarbeitung ausgewertet werden.

In einer weiteren Ausgestaltung der Vorrichtung kann vorgesehen sein, dass eine Blende und die zweite Linsengruppe, die dritte Linsengruppe und eine vierte Linsengruppe von den mindestens vier Linsengruppen relativ zu der ersten Linsengruppe entlang der Längsachse verschiebbar sind, wobei die zweite Linsengruppe zwischen der ersten Linsengruppe und der Blende angeordnet ist, und wobei die dritte und die vierte Linsengruppe zwischen der Blende und der Lichtaustrittsöffnung angeordnet sind.

Auf diese Weise wird ein Objektiv bereitgestellt, bei dem zumindest vier separate Linsengruppen auf einer gemeinsamen optischen Achse angeordnet sind. Die erste Linsengruppe (von der Lichteintrittsöffnung bzw. Frontseite her gesehen) ist feststehend. Dahinter folgen entlang der optischen Achse drei weitere Linsengruppen, die jeweils relativ zu der ersten Linsengruppe entlang der optischen Achse verschiebbar sind. Optional besitzt das Objektiv in einigen Ausgestaltungen eine fünfte Linsengruppe, die im Bereich der Lichtaustrittsöffnung angeordnet und feststehend ist. Die Linsengruppen erzeugen gemeinsam ein Bild auf einem Bildsensor, der über die Schnittstelle mit dem Objektiv gekoppelt ist. Aufgrund der individuellen Verschiebbarkeit der drei Linsengruppen kann das neue Objektiv sehr flexibel auf unterschiedliche Abbildungsverhältnisse eingestellt werden. Wie nachfolgend anhand eines bevorzugten Ausführungsbeispiels erläutert ist, ermöglicht das neue Objektiv insbesondere eine variable Einstellung der Vergrößerung und/oder eine variable Einstellung des Arbeitsabstandes. In den bevorzugten Ausführungsbeispielen ist das neue Objektiv über den gesamten Einstellbereich der Vergrößerung und über den gesamten Einstellbereich des Arbeitsabstandes telezentrisch, was mit Hilfe der axial verschiebbaren Blende sehr gut erreicht werden kann. Die individuelle Verstellbarkeit der drei Linsengruppen macht es darüber hinaus möglich, eine gleichbleibende Vergrößerung über den gesamten Variationsbereich des Arbeitsabstandes oder eine gleichbleibende Fokussierung auf einen Arbeitsabstand über den gesamten Vergrößerungsbereich zu realisieren. Diese Eigenschaften machen es erstmals möglich, ein Messobjekt, das starke Höhendifferenzen parallel zur optischen Achse des Objektivs besitzt, mit gleichbleibenden Parametern zu vermessen, ohne dass der optische Sensor als solcher näher an das Messobjekt heran oder weiter von dem Messobjekt weg bewegt werden muss. Letzteres ermöglicht sehr schnelle Messungen an einer Vielzahl von Messpunkten. Die feststehende erste Linsengruppe besitzt darüber hinaus den Vorteil, dass die "Störkontur" des optischen Sensors im Messvolumen des Koordinatenmessgerätes stets gleich ist. Die Gefahr, dass der Sensor mit dem Messobjekt kollidiert, ist reduziert. Des Weiteren ermöglicht die variable Einstellbarkeit den Verzicht auf Wechseloptiken, die zum Teil bei bisherigen Koordinatenmessgeräten zum Einsatz kamen, um verschiedene Messaufgaben auszuführen.

In einer weiteren Ausgestaltung der Vorrichtung kann vorgesehen sein, dass mindestens zwei Linsengruppen parallel zu der Längsachse verschiebbar sind.

Die Erfindung ist jedoch nicht auf Objektive beschränkt, bei denen der Abbildungsmaßstab oder die Fokuslage verändert werden kann. Es können auch Festbrennweiten mittels der vorgeschlagenen Kalibrieranordnung geprüft werden, wenn ein entsprechendes Reflexionselement einbringbar ist. Da man auf ein spiegelndes Element oftmals nur schwer fokussieren kann, kann ggf. eine Hilfsmarkierung auf der Spiegeloberfläche bzw. der Oberfläche des Reflexionselements aufgebracht sein, um eine Fokussierung mittels der Kamera zu vereinfachen.

In einer weiteren Ausgestaltung der Vorrichtung kann vorgesehen sein, dass das Reflexionselement bildseitig oder objektseitig der Vielzahl von Linsengruppen in den Strahlengang einbringbar ist.

Somit kann auch durch das gesamte Objektiv mit dem Strahlengang gegangen werden, bevor die Kalibrieranordnung eingekoppelt wird. Eine Anordnung bildseitig der Vielzahl von Linsengruppen kann bspw. vorgesehen sein, um bspw. aufgrund von Erwärmung hervorgerufene Veränderungen eines Bildsensors oder Kamerachips der Kamera zu überprüfen.

Grundsätzlich ist die Vorrichtung mit telezentrischen oder nicht telezentrischen Systemen bzw. Objektiven und beliebigen Mischformen einsetzbar. Bei der Vorrichtung kann es sich grundsätzlich um ein Koordinatenmessgerät handeln, es kann sich bspw. auch um ein Mikroskop, bspw. ein Stereomikroskop handeln, das zwei getrennte Strahlengänge für die Objektabbildung aufweist. In diesem Fall können für jeden Strahlengang Reflexionselemente mit zugehöriger Kalibrieranordnung vorgesehen sein, es kann aber auch vorgesehen sein, dass nur eine Kalibrieranordnung vorgesehen ist, die in jeden der Strahleneingänge des Stereomikroskops mittels eines Reflexionselements eingekoppelt werden kann.

Ein genereller Vorteil der Ausgestaltungen, die mit einem holografischen optischen Element arbeiten, ist, dass wenn einmal ein Masterhologramm erzeugt wurde, eine Reproduktion des Hologramms für die Serienfertigung kostengünstig durchführbar ist. Entsprechendes gilt auch für diffraktive optische Elemente.

Ist objektseitig des Reflexionselements noch mindestens eine Linsengruppe in dem Objektiv vorgesehen, wird in der Kalibrieranordnung nicht dieselbe objektseitige mindestens eine Linsengruppe verwendet, die tatsächlich vorhanden wäre. Es muss also ggf. noch eine Korrektur vorgesehen sein, die den Unterschied von Kalibrierungen mittels "echter" Abbildung über die objektseitig vorhandenen Linsengruppen des Objektivs mit einem Kalibrierobjekt auf dem Werkstückträger und einer Kalibrierung mittels der voranstehend beschriebenen Kalibrieranordnung erfasst werden. Diese Korrektur muss nur einmal erfasst werden. Danach kann die Kalibrierung wie voranstehend beschrieben erfolgen. Selbstverständlich kann diese Korrektur hinsichtlich der objektseitigen Linsengruppen auch überprüft werden, dies ist jedoch deutlich seltener der Fall, als dies für die bewegbaren optischen Elemente des Objektivs der Fall ist.

In einer weiteren Ausgestaltung der Vorrichtung kann vorgesehen sein, dass die Elemente der Kalibrieranordnung, insbesondere ein holografisches oder diffraktives optisches Element oder das reale Kalibrierobjekt auf einem thermisch stabilen Träger angebracht sind. Der thermisch stabile Träger kann bspw. aus Glas, Quarzglas oder Zerodur hergestellt sein. Bei Zerodur handelt es sich um einen glaskeramischen Werkstoff der Schott AG, Mainz, Deutschland. Dieser Werkstoff weist einen sehr geringen Wärmeausdehnungskoeffizienten auf.

In einer weiteren Ausgestaltung der Vorrichtung kann vorgesehen sein, dass die Kalibrieranordnung innerhalb eines Gehäuses der Vorrichtung angeordnet ist.

Auf diese Weise kann die Kalibrieranordnung, insbesondere das mindestens eine reale Kalibrierobjekt oder das mindestens eine optische Bildspeicherelement vor äußeren Einflüssen, insbesondere Beschädigungen, geschützt werden. Insbesondere vereinfacht sich dadurch des Weiteren auch das automatische Durchführen einer Kalibrierung, da die Vorrichtung nicht in eine besondere Position zur Durchführung einer Kalibrierung verfahren werden muss.

In einer weiteren Ausgestaltung bestehen die erste, zweite, dritte und vierte Linsengruppe jeweils aus zumindest zwei Linsen. In den bevorzugten Ausführungsbeispielen beinhaltet jede Linsengruppe mindestens ein Kittglied, d.h. mindestens zwei Einzellinsen in jeder der vier Linsengruppen sind permanent und großflächig entlang ihrer optisch wirksamen Flächen verbunden.

Diese Ausgestaltung reduziert die Anzahl der Grenzflächen und trägt daher zu einer hohen Abbildungsgüte über einen großen spektralen Arbeitsbereich bei. In einem bevorzugten Ausführungsbeispiel bilden die vier Linsengruppen lediglich vierzehn Grenzflächen.

In einer weiteren Ausgestaltung besitzt das Objektiv ein separates Deckglas, das vor der ersten Linsengruppe im Bereich der Lichteintrittsöffnung angeordnet ist.

In dieser Ausgestaltung trifft Licht, das über die Lichteintrittsöffnung in den Strahlengang des Objektivs eintritt, zunächst auf das Deckglas und durchläuft erst anschließend die Reihe der Linsengruppen bis zur Lichtaustrittsöffnung. Die Anordnung eines separaten Deckglases vor der ersten Linsengruppe ist eine für Messobjektive ungewöhnliche Maßnahme, da das Deckglas in jedem Fall die optischen Eigenschaften des Objektivs bzw. dessen Strahlengang beeinflusst. In den bevorzugten Ausführungsbeispielen sind die optischen Eigenschaften des Deckglases daher bei der Korrektur der Linsengruppen berücksichtigt, d.h. das Deckglas ist in der Gesamtkorrektur des Objektivs enthalten. Die Bereitstellung eines separaten Deckglases vor der ersten Linsengruppe ist insbesondere dann ungewöhnlich, wenn die erste Linsengruppe zur Erzeugung eines definierten chromatischen Längsfehlers ausgebildet ist, was in bevorzugten Ausführungsbeispielen des neuen Objektivs der Fall ist. Die Ausgestaltung besitzt jedoch den Vorteil, dass ein separates Deckglas einfacher gereinigt und gegebenenfalls ausgewechselt werden kann, wenn die Lichteintrittsöffnung des Objektivs im alltäglichen Betrieb verschmutzt oder gar beschädigt wird. Dementsprechend ist das neue Objektiv in bevorzugten Ausführungsbeispielen so ausgebildet, dass das separate Deckglas reversibel und zerstörungsfrei lösbar im Objektivkörper gehalten ist.

In einer weiteren Ausgestaltung definieren die erste und die zweite Linsengruppe zusammen einen Brennpunkt, der zwischen der zweiten und der dritten Linsengruppe liegt, wobei die Steuerkurve für die Blende und die Steuerkurve für die zweite Linsengruppe so aufeinander abgestimmt sind, dass die Blende stets in dem Brennpunkt oder der Brennebene angeordnet ist.

Diese Ausgestaltung sichert dem neuen Objektiv trotz der flexiblen Variationsmöglichkeiten eine zumindest objektseitige Telezentrie über sämtliche Vergrößerungen und Arbeitsabstände, wenn die Blendenöffnung passend zu der Vergrößerungseinstellung oder dem Arbeitsabstand gewählt wird. Die objektseitige Telezentrie ist vorteilhaft, um insbesondere die Tiefe von Bohrungen, Vorsprüngen oder Ausnehmungen an einem Messobjekt zu bestimmen, weil der "Blick" auf das Messobjekt trotz der in diesen Fällen unterschiedlichen Arbeitsabstände weitgehend gleichbleibt. Vorteilhaft wird durch eine objektseitige Telezentrie eine perspektivische Verzerrung in der Abbildung des Messobjekts vermieden.

In einer weiteren Ausgestaltung besitzt die Blende eine variable Blendenöffnung, die vorzugsweise in Abhängigkeit von der Position der Blende entlang der optischen Achse variiert.

In dieser Ausgestaltung besitzt das neue Objektiv einen weiteren Freiheitsgrad, nämlich die Öffnung der Blende. Diese macht es möglich, die numerische Apertur des Objektivs zu verändern und so die erreichbare Auflösung des Objektivs zu variieren. In bevorzugten Ausführungsbeispielen sind die oben erwähnten Steuerkurven einschließlich der individuellen Steuerkurve für die Blendenöffnung so ausgebildet, dass das Objektiv einen Betriebsmodus mit einer konstanten bildseitigen Apertur über verschiedene Arbeitsabstände bietet. Dieser Betriebsmodus ist vorteilhaft, um über verschiedene Arbeitsabstände mit einer gleichbleibend hohen Messgenauigkeit im Bild arbeiten zu können.

In den bevorzugten Ausführungsbeispielen liegt die Blende zentrisch zur optischen Achse, und zwar mit einem Zentrierfehler, der geringer als 20 µm ist und vorzugsweise weniger als 10 µm beträgt. Vorzugsweise ist die Blende eine Irisblende, die individuell motorisch ansteuerbar ist, wobei die Ansteuerung unter Verwendung einer Steuerkurve erfolgt, die zu der oben erwähnten Kurvenschar gehört. Diese Ausführungsbeispiele ermöglichen eine einfache Implementierung und eine gleichbleibend hohe Messgenauigkeit über den gesamten Arbeitsbereich.

In einer weiteren Ausgestaltung weist das Objektiv eine Vielzahl von Schlitten und motorischen Antrieben auf, wobei die zweite, dritte und vierte Linsengruppe und die Blende jeweils mit einem eigenen Schlitten gekoppelt sind, der entlang der optischen Achse verstellbar ist, und wobei die Schlitten mit Hilfe der motorischen Antriebe individuell verfahrbar sind.

In dieser Ausgestaltung sind die entlang der optischen Achse verstellbaren Elemente jeweils mit einem eigenen Antrieb gekoppelt. In einigen Ausführungsbeispielen ist der Antrieb ein Schrittmotor, der vorzugsweise im Vollschrittbetrieb arbeitet, da dies einen geringen Wärmeeintrag in das Objektiv zur Folge hat. Die Ausgestaltung ermöglicht eine modulare und vergleichsweise kostengünstige Realisierung. Alternativ können auch Gleichstrommotoren, insbesondere in bürstenloser Ausführung, verwendet werden.

In einer weiteren Ausgestaltung besitzt die erste Linsengruppe eine positive Brechkraft. Vorzugsweise besitzt die zweite Linsengruppe eine negative Brechkraft, die dritte Linsengruppe eine positive Brechkraft und die vierte Linsengruppe eine negative Brechkraft.

Diese Ausgestaltung hat sich in praktischen Versuchen als sehr vorteilhaft erwiesen, um eine kompakte Bauform und eine geringe Störkontur des Objektivs im Messvolumen des neuen Koordinatenmessgerätes zu erreichen.

In weiteren Ausführungsbeispielen kann über die weitere Schnittstelle ein Streifenmuster oder eine andere strukturierte Beleuchtung eingekoppelt werden, die beispielsweise anhand des von der Kamera aufgenommenen Bildes analysiert wird, um ein Messobjekt zu vermessen. Vorzugsweise ist zwischen der vierten Linsengruppe und der Lichtaustrittsöffnung des Objektivs ein weiterer Freiraum vorgesehen, in dem ebenfalls ein Strahlteiler angeordnet ist. Bevorzugt ist eine dritte Schnittstelle auf Höhe des weiteren Strahlteilers angeordnet, so dass auch hinter dem optischen System aus den vier Linsengruppen die Ein- und Auskopplung von Beleuchtung und/oder Signalen möglich ist. Die Flexibilität und der Einsatzbereich des neuen Objektivs und des entsprechenden Koordinatenmessgerätes werden damit noch weiter erhöht.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: ein Ausführungsbeispiel eines Koordinatenmessgerätes in einer Ansicht von schräg vorne,
- Fig. 2: eine schematische Darstellung des Objektivs aus dem Koordinatenmessgerät aus Fig. 1,
- Fig. 3: ein Schnittbild der Linsengruppen des Objektivs aus Fig. 2 gemäß einem bevorzugten Ausführungsbeispiel, wobei die Linsengruppen in fünf verschiedenen Arbeitspositionen dargestellt sind, die unterschiedliche Vergrößerungen bei jeweils gleichem Arbeitsabstand repräsentieren,
- Fig. 4: ein weiteres Schnittbild des Objektivs aus Fig. 2 mit fünf verschiedenen Arbeitspositionen, die fünf verschiedene Vergrößerungen bei einem anderen Arbeitsabstand als in Fig. 3 repräsentieren,
- Fig. 5: ein weiteres Schnittbild des Objektivs aus Fig. 2, wobei die Position der Linsengruppen entlang der optischen Achse bei jeweils gleicher Vergrößerung für fünf verschiedene Arbeitsabstände dargestellt ist,
- Fig. 6: ein schematisch dargestelltes Ausführungsbeispiel eines erfindungsgemäßen Koordinatenmessgeräts,
- Fig. 7: ein Ausführungsbeispiel einer Kalibrieranordnung,
- Fig. 8: ein weiteres Ausführungsbeispiel einer Kalibrieranordnung,
- Fig. 9: ein weiteres schematisch dargestelltes Ausführungsbeispiel eines Koordinatenmessgeräts,
- Fig. 10: noch ein weiteres schematisch dargestelltes Ausführungsbeispiel eines Koordinatenmessgeräts, und
- Fig. 11: ein schematisches Ablaufdiagramm eines Ausführungsbeispiel eines Verfahrens zum Kalibrieren.

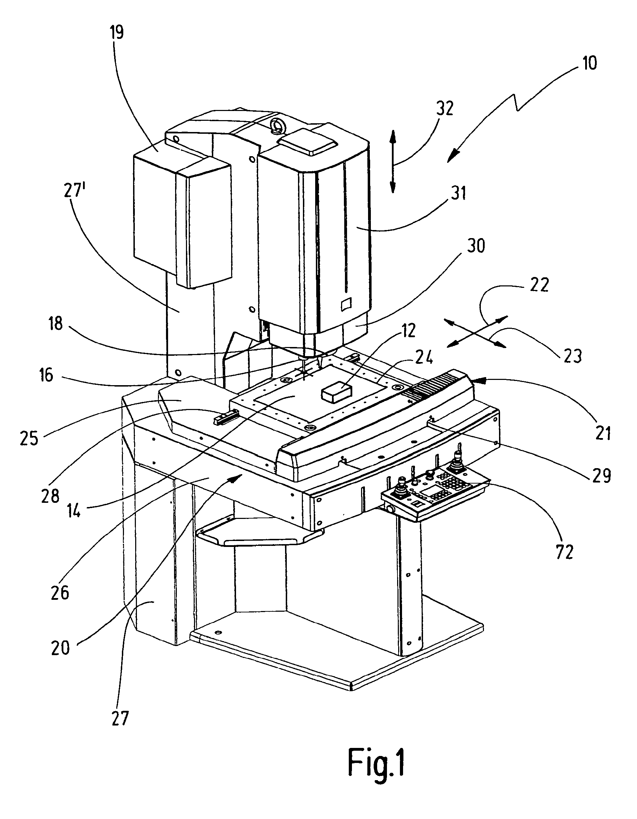

Die Fig. 1 zeigt eine Vorrichtung 10 zum Inspizieren eines Messobjekts 12, das auf einer Werkstückaufnahme 14 angeordnet ist. In der dargestellten Ausführungsform handelt es sich bei der Vorrichtung 10 um ein Koordinatenmessgerät. Das Messobjekt 12 wird mittels eines oder mehrerer optischer Sensoren 18 vermessen. Wahlweise können zusätzlich auch einer oder mehrere taktile Sensoren 16 vorgesehen sein.

Koordinatenmessgeräte sind im Stand der Technik allgemein bekannt. Sie dienen dazu, beispielsweise im Rahmen einer Qualitätssicherung Werkstücke zu überprüfen oder die Geometrie eines Werkstücks vollständig im Rahmen eines sogenannten "Reverse Engineering" zu ermitteln. Darüber hinaus sind vielfältige weitere Anwendungsmöglichkeiten denkbar, so beispielsweise auch der zusätzliche Einsatz zum Inspizieren von Oberflächen.

In derartigen Koordinatenmessgeräten können verschiedene Arten von Sensoren zur Anwendung kommen, um die Koordinaten eines zu vermessenden Werkstücks zu erfassen. Beispielsweise sind hierzu taktil messende Sensoren bekannt, wie sie etwa von der Anmelderin unter der Produktbezeichnung "VAST", "VAST XT" oder "VAST XXT" vertrieben werden. Hierbei wird die Oberfläche des zu vermessenden Werkstücks mit einem Taststift angetastet, dessen Koordinaten im Messraum ständig bekannt sind. Ein derartiger Taststift kann auch entlang der Oberfläche eines Werkstücks bewegt werden, so dass in einem solchen Messvorgang im Rahmen eines sogenannten "Scanning-Verfahrens" eine Vielzahl von Messpunkten in festgelegten zeitlichen Abständen erfasst werden kann.

Darüber hinaus ist es bekannt, optische Sensoren einzusetzen, die ein berührungsloses Erfassen der Koordinaten eines Werkstücks ermöglichen. Ein Beispiel für einen derartigen optischen Sensor ist der unter der Produktbezeichnung "ViScan" von der Anmelderin vertriebene optische Sensor.

Die Sensoren können dann in verschiedenen Arten von Messaufbauten verwendet werden. Ein Beispiel für einen solchen Messaufbau ist ein Tischaufbau, wie er in der Fig. 1 gezeigt ist. Ein Beispiel für einen solchen Tischaufbau ist das Produkt "O-INSPECT" der Anmelderin. Bei einem derartigen Gerät finden sowohl ein optischer Sensor als auch ein taktiler Sensor Anwendung, um verschiedene Prüfaufgaben an einer Maschine und idealerweise mit einer einzigen Aufspannung eines zu vermessenden Werkstücks durchzuführen. Auf diese Weise lassen sich einfach viele Prüfaufgaben beispielsweise in der Medizintechnik, der Kunststofftechnik, der Elektronik und der Feinmechanik durchführen. Selbstverständlich sind darüber hinaus auch verschiedene andere Aufbauten denkbar.

Derartige Sensorsysteme bzw. Sensorköpfe, die sowohl taktile als auch optische Sensoren tragen, finden in der Koordinatenmesstechnik zunehmend Bedeutung. Eine Kombination taktiler und optischer Sensoren ermöglicht es, in einem einzigen Koordinatenmessgerät die Vorteile der hohen Genauigkeit eines taktilen Messsystems mit der Geschwindigkeit eines optischen Messsystems zu kombinieren. Des Weiteren werden Kalibriervorgänge bei Sensorwechseln vermieden, ebenso wie ein eventuelles Umspannen eines Werkstücks.

Klassischerweise ist der Sensorkopf, der auch als Sensorsystem bezeichnet werden kann, mit einem Trägersystem verbunden, welches das Sensorsystem stützt und bewegt. Im Stand der Technik sind verschiedene Trägersysteme bekannt, beispielsweise Portalsysteme, Ständer-, Horizontalarm- und Armsysteme, alle Arten von Robotersystemen und letztlich geschlossene CT-Systeme bei mit Röntgenstrahlen arbeitenden Sensorsystemen. Die Trägersysteme können dabei des Weiteren Systemkomponenten aufweisen, die ein möglichst flexibles Positionieren des Sensorkopfs ermöglichen. Ein Beispiel hierfür ist das unter der Bezeichnung "RDS" vertriebene DrehSchwenk-Gelenk der Anmelderin. Darüber hinaus können verschiedene Adapter vorgesehen sein, um die unterschiedlichen Systemkomponenten des Trägersystems untereinander und mit dem Sensorsystem zu verbinden.

Der Einsatz der Vorrichtung 10 und das Koordinatenmessgerät 100 sind somit nicht auf den in der Fig. 1 dargestellten Tischaufbau und das entsprechende Trägersystem beschränkt, sondern können auch mit allen anderen Arten von Trägersystemen Verwendung finden. Des Weiteren kann die Vorrichtung 10 auch allgemein in MultiSensor-Messsystemen oder auch in einem Materialmikroskop Anwendung finden.

Die Vorrichtung 10 weist des Weiteren einen Messtisch 20 auf. An dem Messtisch 20 befindet sich eine Positioniereinrichtung 21. Diese ist insbesondere dazu vorgesehen, um das Messobjekt 12 parallel zu einer X-Achse 19 und zu einer Y-Achse 23 zu positionieren. Die X-Achse 19 und die Y-Achse 23 spannen dabei eine Messebene auf.

Zur Positionierung können beispielsweise ein X-Tisch 24 und ein Y-Tisch 25 vorgesehen sein. Der X-Tisch 24 ist parallel zu der X-Achse 21 und der Y-Tisch 25 ist parallel zu der Y-Achse 19 bewegbar. Beide sind auf einer Grundplatte 26 angeordnet. Die Grundplatte 54 wird von einem Maschinengestell 27 bzw. 27' getragen.

Die Bewegung des X-Tisches 24 und des Y-Tisches 25 wird durch Linearführungen in X-Richtung 28 und in Linearführungen in Y-Richtung 29 geführt. Dieser Aufbau entspricht dem sogenannten "Tischaufbau". Wie voranstehend ausgeführt wurde, sind auch andere Trägersysteme denkbar.

Die Vorrichtung 10 weist des Weiteren einen Messkopf 15 auf. An dem Messkopf 15 können einer oder mehrere taktile Sensoren 16 angeordnet sein. Des Weiteren ist an dem Messkopf 15 die Vorrichtung 10 angeordnet. Darüber hinaus können auch noch einer oder mehrere weitere optische Sensoren 18 an oder in dem Messkopf 16 angeordnet sein. Der Messkopf 15 dient also dazu, den einen oder mehrere optische Sensoren 18 und eventuell einen taktilen Sensor 16 mit einer Trägerstruktur, beispielsweise einem Z-Schlitten 30, zu koppeln. Bei dem Messkopf 15 kann es sich um einen geschlossenen Gehäuseaufbau handeln, er kann jedoch auch offen ausgebildet sein. Beispielsweise kann der Messkopf 15 auch die Form einer einfachen Platte aufweisen, an der der eine oder mehrere optische Sensoren 18 und eventuell der taktile Sensor 16 befestigt ist. Darüber hinaus sind auch alle weiteren möglichen Formen zum Koppeln des einen oder der mehreren optische Sensoren 18 und eventuell des taktilen Sensor 16 mit der Trägerstruktur denkbar.

Der Messkopf 15 ist an dem Z-Schlitten 30 gehalten, der in einem Schlittengehäuse 31 parallel zu einer Z-Achse 32 geführt ist. Diese Z-Achse 32 steht senkrecht auf der X-Achse 22 und auf der Y-Achse 23. Die X-Achse 22, die Y-Achse 23 und die Z-Achse 32 bilden somit ein kartesisches Koordinatensystem.

Die Vorrichtung 10 weist des Weiteren ein Bedienpult 33 auf. Mit dem Bedienpult 72 können die einzelnen Elemente der Vorrichtung 10 angesteuert werden. Des Weiteren können Eingaben an der Vorrichtung 10 vorgegeben werden. Grundsätzlich kann auch vorgesehen sein, dass in dem Bedienpult 33 oder an anderer Stelle eine Anzeigevorrichtung (nicht dargestellt) angeordnet ist, um Messwertausgaben an einen Nutzer der Vorrichtung 10 zu richten.

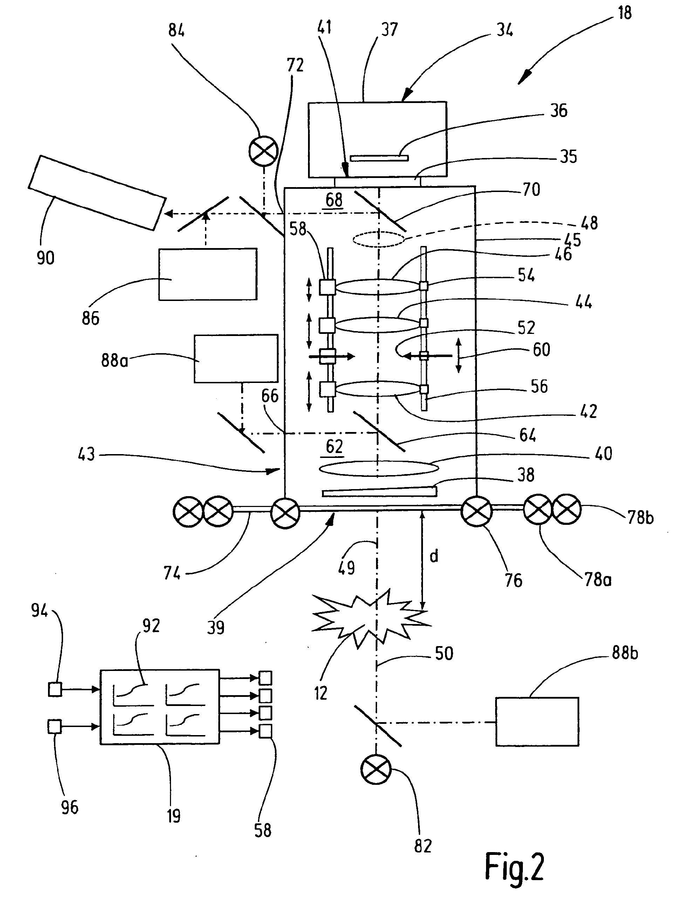

Fig. 2 zeigt ein Ausführungsbeispiel des optischen Sensors 18, wobei der optische Sensor 18 in diesem Ausführungsbeispiel genau genommen mehrere optische Sensoren beinhaltet, die wahlweise vorhanden und verwendet sein können. Das neue Objektiv kann darüber hinaus mit weiteren optischen Sensoren kombiniert werden, etwa mit einem deflektometrisch messenden Sensor.

Der Sensor 18 beinhaltet ein Objektiv 43 mit einem Objektivkörper 45. In typischen Ausführungsbeispielen ist der Objektivkörper 45 ein Tubus mit einer Lichteintrittsöffnung 39 und einer Lichtaustrittsöffnung 41, die an gegenüberliegenden Enden des Tubus angeordnet sind. Prinzipiell kann der Objektivkörper 45 jedoch auch eine von einem Tubus abweichende Form haben.

An der Lichtaustrittsöffnung 41 ist eine Schnittstelle 35 ausgebildet, die zum Anschluss einer Kamera 34 mit einem Bildsensor 36 dient. In bevorzugten Ausführungsbeispielen ist die Schnittstelle 35 eine standardisierte bzw. verbreitete Schnittstelle zur Kopplung von Kameras und Objektiven, etwa ein sogenannter F-Mount oder ein sogenannter C-Mount. In einigen Ausführungsbeispielen ist die Schnittstelle 35 jedoch eine proprietäre Schnittstelle, die es insbesondere möglich macht, das Gehäuse 37 der Kamera 34 direkt mit dem Objektivkörper 45 zu verbinden. Prinzipiell können auch andere standardisierte oder proprietäre Schnittstellen zum Anschluss der Kamera 34 an den Objektivkörper 45 verwendet sein.

Im Bereich der Lichteintrittsöffnung 39, die das distale Ende des Objektivs 43 definiert, ist ein Deckglas 38 im Objektivkörper 45 oder am Objektivkörper 45 angeordnet. In einigen Ausführungsbeispielen kann das Deckglas 38 ein Schraubglas sein, das in eine Gewindefassung am distalen Ende des Objektivkörpers 45 eingeschraubt wird. In anderen Ausführungsbeispielen kann das Deckglas 38 in eine geeignete Ausnehmung am Objektivkörper 45 eingeschoben, eingeklipst, eingeklebt oder anderweitig mit dem Objektivkörper 45 ortsfest verbunden sein. In den bevorzugten Ausführungsbeispielen ist das Deckglas 38 so mit dem Objektivkörper 45 verbunden, dass ein Anwender des Koordinatenmessgerätes 10 das Deckglas 38 ohne eine Beschädigung des Objektivs 43 austauschen kann.

In dem dargestellten Ausführungsbeispiel ist das Deckglas 38 eine keilförmige Glasplatte, deren Dicke von einem Rand zum anderen Rand zunimmt, wie dies in der vereinfachten Schnittdarstellung der Fig. 2 dargestellt ist. Das Deckglas 38 besitzt in diesem Fall einen Keilwinkel, der so gewählt ist, dass ein Reflex an der vorderen (zum distalen Ende des Objektivs 43 hin) oder der hinteren Seite des Deckglases 38 nicht auf den Bildsensor 36 der Kamera 34 gelangt. Sowohl die vordere Seite als auch die hintere Seite des Deckglases 38 ist zu einer optischen Achse der im Folgenden noch erläuterten Linsengruppen geneigt angeordnet. In anderen Ausführungsbeispielen könnte ein Deckglas mit planparallelen Vorder- und Rückseiten leicht schräg zum Bildsensor 36 bzw. der nachfolgend noch näher erläuterten optischen Achse des Objektivs 43 angeordnet sein.

In weiteren Ausführungsbeispielen kann das Deckglas 38 in Form einer dünnen Folie realisiert sein, die im Bereich der Lichteintrittsöffnung 39 des Objektivs 43 eingespannt ist. In einigen Ausführungsbeispielen kann das Deckglas polarisierend sein, so dass das durchtretende Licht polarisiert wird, und/oder das Deckglas kann ein Farbfilter zur Unterdrückung von Umgebungslicht beinhalten. Das Deckglas 38 kann auch eine 7,/4-Platte sein, die eine Polarisationsdrehung hervorruft.

Im dargestellten Ausführungsbeispiel ist zwischen dem Deckglas 38 und der Lichtaustrittsöffnung 41 des Objektivs 43 ein Linsensystem mit einer ersten Linsengruppe 40, einer zweiten Linsengruppe 42, einer dritten Linsengruppe 44 und einer vierten Linsengruppe 46 angeordnet. In einigen Ausführungsbeispielen ist zwischen der vierten Linsengruppe 46 und der Lichtaustrittsöffnung 41 noch eine fünfte Linsengruppe angeordnet, die hier in gestrichelten Linien dargestellt ist. Die Linsengruppen 40-48 sind in dem Objektivkörper 45 hintereinander zwischen der Lichteintrittsöffnung 39 und der Lichtaustrittsöffnung 41 entlang einer Längsachse 49 des Objektivkörpers 45 angeordnet. Im dargestellten Ausführungsbeispiel erfährt ein die Linsengruppen 40-48 in ihrer jeweiligen Mitte oder Zentrum durchtretender Lichtstrahl keine Ablenkung, so dass die Längachse 49 mit einer optischen Achse 50 des Objektivs 43 zusammenfällt.

Zwischen der zweiten Linsengruppe 42 und der dritten Linsengruppe 44 ist eine Blende 52 angeordnet. In den bevorzugten Ausführungsbeispielen ist die Blende 52 eine Irisblende, d.h. eine Blende, deren lichter Innendurchmesser variiert werden kann.

Die zweite, dritte und vierte Linsengruppe 42, 44, 46 sowie die Blende 52 sind jeweils mit einem eigenen Schlitten 54 gekoppelt, der entlang von zwei Führungsschienen 56 bewegt werden kann. Ferner sind die drei Linsengruppen und die optische Blende 52 in diesem Ausführungsbeispiel jeweils mit einem elektrischen Antrieb 58 gekoppelt. Mit Hilfe der Antriebe 58 können die zweite, dritte und vierte Linsengruppe sowie die Blende 52 parallel zur optischen Achse 50 verfahren werden, wie das anhand der Pfeile 60 angedeutet ist. Im Gegensatz dazu ist die erste Linsengruppe 40 und die optionale fünfte Linsengruppe 48 in den bevorzugten Ausführungsbeispielen ortsfest in dem Objektivkörper 45 angeordnet.

Wie man in der Fig. 2 erkennen kann, ist bei einigen Ausführungsbeispielen ein Freiraum 62 zwischen der ersten Linsengruppe 40 und der zweiten Linsengruppe 42 vorhanden, der selbst dann bleibt, wenn die zweite Linsengruppe 42 auf einen minimalen Abstand zur ersten Linsengruppe 40 positioniert wurde. In den bevorzugten Ausführungsbeispielen ist ein Strahlteiler 64 in dem Freiraum 62 auf der optischen Achse 50 angeordnet, um wahlweise Licht von einer weiteren Schnittstelle 66 des Objektivs 43 einoder auszukoppeln. In den bevorzugten Ausführungsbeispielen ist die zweite Schnittstelle 66 etwa auf Höhe des Strahlteilers 64 am seitlichen Umfang des Objektivkörpers 45 angeordnet.

In ähnlicher Weise ist in einigen Ausführungsbeispielen des Objektivs 43 ein weiterer Freiraum 68, in dem ebenfalls ein Strahlteiler 70 angeordnet ist, zwischen der vierten Linsengruppe 46 und der Lichtaustrittsöffnung 41. Auf Höhe des Strahlteilers 70 befindet sich eine weitere Schnittstelle 72, über die Licht ein- und/oder ausgekoppelt werden kann. In dem dargestellten Ausführungsbeispiel ist der Strahlteiler 70 zwischen der fünften Linsengruppe 48 und der Lichtaustrittsöffnung 41 angeordnet. Alternativ oder ergänzend hierzu könnte der Strahlteiler 70 zwischen der vierten Linsengruppe 46 und der fünften Linsengruppe 48 angeordnet sein, was natürlich einen entsprechenden Freiraum voraussetzt.

In bevorzugten Ausführungsbeispielen besitzt das Objektiv 43 im Bereich der Lichteintrittsöffnung 39 einen Halter 74, an dem verschiedene Lichtquellen 76, 78 angeordnet sind. In dem dargestellten Ausführungsbeispiel trägt der Halter 74 ein Ringlicht mit einer Vielzahl von Lichtquellen 78a, 78b, die rund um den Objektivkörper 45 mit verschiedenen radialen Abständen angeordnet sind. In einigen Ausführungsbeispielen sind die Lichtquellen 78a, 78b in der Lage, verschiedenfarbiges Licht zu erzeugen, etwa weißes Licht, rotes Licht, grünes Licht und blaues Licht sowie Mischungen davon. Die Lichtquellen 78a, 78b können dazu verwendet werden, unterschiedliche Beleuchtungsszenarien in unterschiedlichen Abständen vor der Lichteintrittsöffnung 39 zu erzeugen. Beispielhaft ist bei der Bezugsziffer 12 ein Messobjekt 12 schematisch angedeutet, das in einem Abstand d zu der Lichteintrittsöffnung 39 des Objektivs 43 positioniert ist. Der Abstand d repräsentiert einen Arbeitsabstand zwischen dem Objektiv 43 und dem Messobjekt 12, wobei dieser Arbeitsabstand anhand der Fokussierung des Objektivs 43 variabel einstellbar ist.

Die Lichtquellen 76 sind im vorliegenden Ausführungsbeispiel Lichtquellen, die in den Objektivkörper 45 integriert sind. In einigen Ausführungsbeispielen sind die Lichtquellen 76 außerhalb des Linsensystems in den Objektivkörper 45 integriert, wie dies in Fig. 2 dargestellt ist. In anderen Ausführungsbeispielen (alternativ oder ergänzend) können Lichtquellen 76 so in den Objektivkörper 45 integriert sein, dass das von den Lichtquellen 76 erzeugte Licht zumindest durch einige der Linsengruppen und gegebenenfalls das Deckglas 38 hindurch aus dem Objektivkörper 45 austritt. In diesem Fall ist die Lichteintrittsöffnung 39 gleichzeitig auch eine Lichtaustrittsöffnung.

Mit den Lichtquellen 76, 78 ist es möglich, das Messobjekt 12 variabel zu beleuchten, um wahlweise eine Hellfeld- und/oder eine Dunkelfeldbeleuchtung zu erzeugen. In beiden Fällen handelt es sich um Auflicht, das aus Richtung des Objektivs 43 auf das Messobjekt 12 trifft.

Darüber hinaus besitzt das Koordinatenmessgerät 10 in bevorzugten Ausführungsbeispielen eine weitere Lichtquelle 82, die eine Durchlichtbeleuchtung des Messobjekts 12 ermöglicht. Dementsprechend ist die Lichtquelle 82 unterhalb des Messobjekts 12 bzw. unterhalb der Werkstückaufnahme des Koordinatenmessgerätes 10 angeordnet. In den bevorzugten Ausführungsbeispielen besitzt das Koordinatenmessgerät 10 daher eine Werkstückaufnahme 12, die mit einer Glasplatte versehen ist, um die Durchlichtbeleuchtung zu ermöglichen.

Schließlich besitzt der optische Sensor 18 in diesen Ausführungsbeispielen eine Auflichtbeleuchtungseinrichtung 84, die hier über einen weiteren Strahlteiler mit der Schnittstelle 72 gekoppelt sein kann. Die Lichtquelle 84 kann über die Schnittstelle 72 und den Strahlteiler 70 Licht in den gesamten Strahlengang des Objektivs 43 einkoppeln. Das eingekoppelte Licht wird hier über das Linsensystem der ersten bis vierten (fünften) Linsengruppe auf das Messobjekt 12 geworfen.

In gleicher Weise können verschiedene Beleuchtungen über die Schnittstelle 66 und prinzipiell auch über die Lichtaustrittsöffnung 41 in den Strahlengang des Objektivs 43 eingekoppelt werden. Beispielhaft ist ein Gitterprojektor bei der Bezugsziffer 86 dargestellt. Der Gitterprojektor erzeugt ein strukturiertes Lichtmuster, das in diesem Ausführungsbeispiel über zwei Strahlteiler und die Schnittstelle 72 in den Strahlengang des Objektivs 43 eingekoppelt wird. In einigen Ausführungsbeispielen kann eine Lichtquelle ein Laserpointer sein, mit dem einzelne Messpunkte an dem Messobjekt 12 gezielt beleuchtet werden können. In anderen Ausführungsbeispielen kann eine Lichtquelle ein strukturiertes Lichtmuster, etwa ein Streifenmuster oder Gittermuster, erzeugen, welches über das Linsensystem des Objektivs 43 auf das Messobjekt 12 projiziert wird.

Wie in Fig. 2 dargestellt ist, kann das Objektiv 43 auf verschiedene Weise mit optischen Sensoren kombiniert werden, die alternativ oder ergänzend zu der Kamera 34 zur optischen Vermessung des Messobjekts 12 dienen. In der Figur 2 ist lediglich beispielhaft ein erster konfokaler Weißlichtsensor 88a an die Schnittstelle 66 angekoppelt. Alternativ oder ergänzend kann ein konfokaler Weißlichtsensor 88b beispielsweise über einen Strahlteiler in den Beleuchtungspfad für die Durchlichtbeleuchtung 82 eingekoppelt werden. Die Sensoren 88a und 88b können eine punktförmige Messung durchführen. Wie im Folgenden noch erläutert wird, wird vorliegend jedoch unter Nutzung des Freiraums 62 eine neue Art der optischen Abstandmessung vorgeschlagen.

Mit der Bezugsziffer 90 ist ein Autofokussensor bezeichnet, mit dessen Hilfe die Höhenlage des Messobjekts 12 parallel zur optischen Achse 50 anhand einer Bestimmung der Fokuslage ermittelt werden kann. Darüber hinaus ist eine optische Vermessung des Messobjekts 12 mit Hilfe der Kamera 34 und einer geeigneten Bildauswertung möglich, wie dies den einschlägigen Fachleuten auf diesem Gebiet bekannt ist.

Das Objektiv 43 besitzt in den bevorzugten Ausführungsbeispielen aufgrund der verfahrbaren Linsengruppen 42, 44, 46 und der verstellbaren Blende 52 einen großen Einsatzbereich. In den bevorzugten Ausführungsbeispielen ist eine Vielzahl von Steuerkurven 92 in einem Speicher der Auswerte- und Steuereinheit 19 oder einem anderen geeigneten Speicher hinterlegt. Die Vielzahl der Steuerkurven 92 bildet in den bevorzugten Ausführungsbeispielen eine 2D-Kurvenschar, mit deren Hilfe die Vergrößerung und die Fokussierung des Objektivs 43 in zahlreichen frei wählbaren Kombinationen eingestellt werden kann. In dem dargestellten Ausführungsbeispiel kann ein Anwender eine gewünschte Vergrößerung 94 und eine gewünschte Fokussierung 96 in die Auswerte- und Steuereinheit 19 eingeben. Die Auswerte- und Steuereinheit 19 bestimmt mit Hilfe der Steuerkurven 92 und in Abhängigkeit der gewünschten Vergrößerung 94 und gewünschten Fokussierung 96 individuelle Positionen der zweiten, dritten und vierten Linsengruppe entlang der optischen Achse 50 sowie eine individuelle Position und Öffnung der Blende 52. In einigen Ausführungsbeispielen des neuen Verfahrens kann der Anwender durch Variieren der Fokussierung den Arbeitsabstand d zu einem Messobjekt variieren, ohne dass der Sensor 18 mit Hilfe der Pinole 14 relativ zu dem Messobjekt bewegt werden muss. Beispielsweise ist es so möglich, Strukturen an der Oberfläche eines Messobjekts 12 und Strukturen am Grund einer Bohrung (hier nicht dargestellt) des Messobjekts 12 zu vermessen, indem bei gleichbleibender Vergrößerung lediglich die Fokussierung des Objektivs 43 so variiert wird, dass im einen Fall die Struktur an der Oberfläche des Messobjekts 12 und im anderen Fall die Struktur am Grund der Bohrung in der Fokusebene des Objektivs 43 liegt.

In anderen Varianten kann ein Anwender bei gleichbleibendem oder wechselndem Arbeitsabstand d, der einen Abstand zwischen dem Messobjekt 12 und einer ersten Störkontur, nämlich der Lichteintrittsöffnung 39 des Objektivs 43 bezeichnet, die Vergrößerung des Objektivs 43 variieren, um beispielsweise Details eines zuvor "aus der Vogelperspektive" vermessenen Messobjekts 12 erneut zu vermessen.

Des Weiteren kann ein Anwender in einigen Ausführungsbeispielen die numerische Apertur des Objektivs 43 durch Öffnen oder Schließen der Blende 52 verändem, um auf diese Weise eine gleichbleibende Auflösung bei unterschiedlichen Arbeitsentfernungen d zu erreichen. Ferner kann ein Anwender die Vergrößerung, Fokussierung, numerische Apertur einzeln oder in Kombination miteinander variieren, um das Objektiv 43 optimal an die Eigenschaften der verschiedenen Sensoren 36, 88, 90 anzupassen.

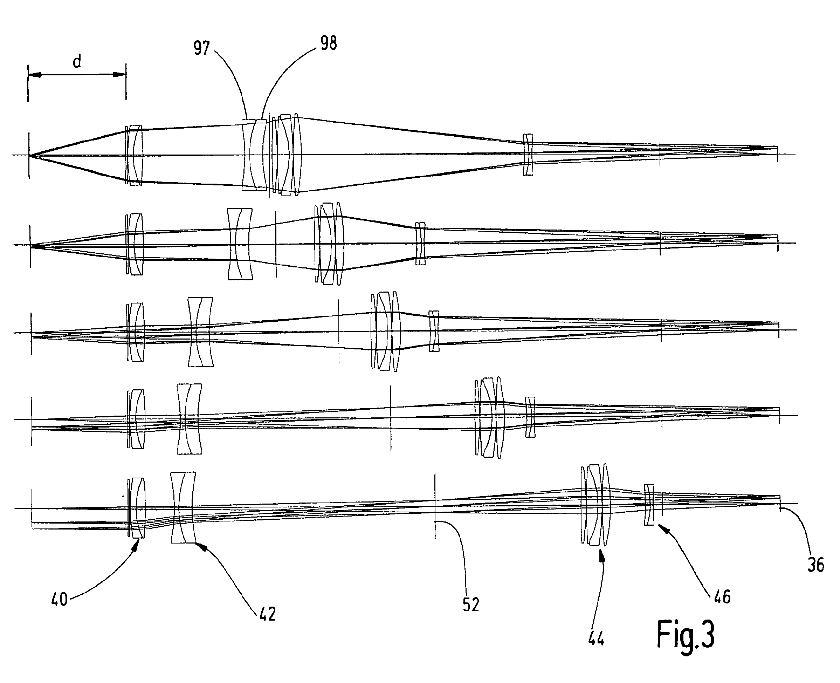

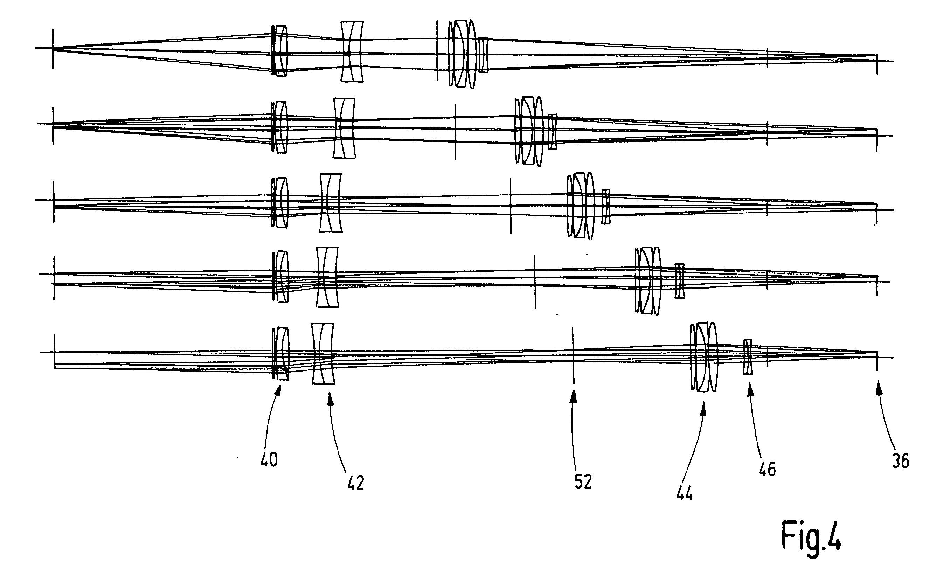

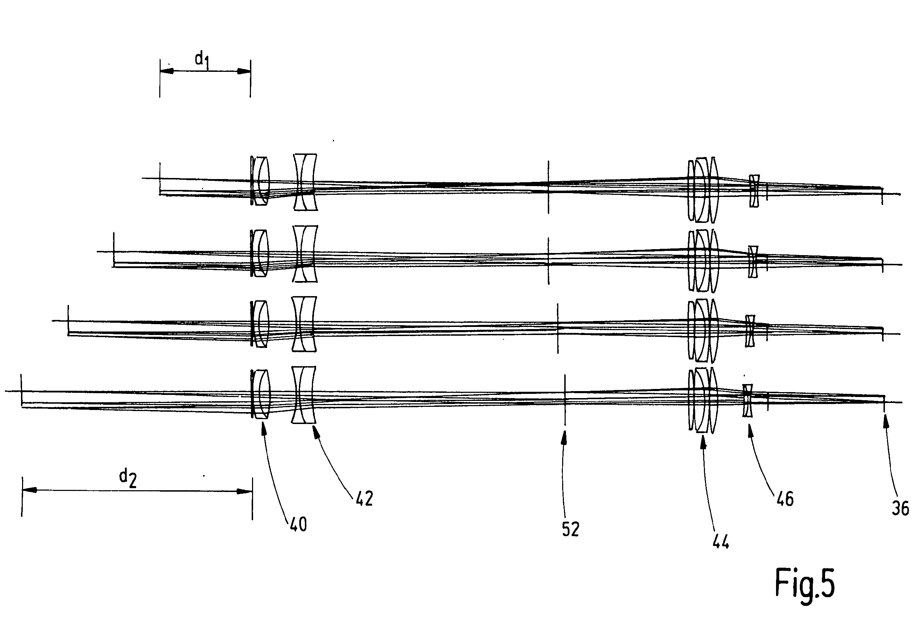

In den Fig. 3 bis 5 sind die Positionen der Linsengruppen 40, 42, 44, 46 und die Position der Blende 52 für verschiedene Arbeitsentfernungen d und verschiedene Vergrößerungen dargestellt. Wie man anhand der Schnittbilder erkennen kann, besitzt jede Linsengruppe mehrere Linsen 97, 98, wobei in diesem Ausführungsbeispiel in jeder Linsengruppe zumindest ein Kittglied bestehend aus zumindest zwei Linsen 97, 98 verwendet ist. Einige der Linsengruppen besitzen weitere separate Linsen. Bei einer hohen Vergrößerung stehen die zweite und dritte Linsengruppe nahe beieinander, wobei der tatsächliche Abstand zwischen der zweiten und dritten Linsengruppe zusätzlich vom Arbeitsabstand d abhängt. Wie man anhand Fig. 3 erkennen kann, stehen die zweite und dritte Linsengruppe bei kleinerem Arbeitsabstand d näher zusammen als bei einem größeren Arbeitsabstand.

Mit abnehmender Vergrößerung wandern die zweite und dritte Linsengruppe auseinander, wobei sich die zweite Linsengruppe der ersten Linsengruppe annähert. In der hohen Vergrößerung fokussieren die erste und zweite Linsengruppe ein vom Messobjekt entworfenes (virtuelles) Bild vor die Blende 52. Die vierte Linsengruppe wirkt in diesem Fall als Projektiv. Sie verlagert das Bild in die Ebene des Bildsensors 36. Mit abnehmender Vergrößerung entfernt sich das von der ersten und zweiten Linsengruppe entworfene Bild weiter von der Blende. Die dritte und vierte Linsengruppe nähern sich an und bilden mit gemeinsamer positiver Brechkraft das virtuelle Bild auf die Ebene des Bildsensors 36 ab.

In allen bevorzugten Ausführungsbeispielen folgt die Blende 52 jeweils dem Brennpunkt des aus der ersten und zweiten Linsengruppe gebildeten Teilsystems. Dies ermöglicht eine gute Feldkorrektion mit Hilfe der dritten und vierten Linsengruppe.

In einem bevorzugten Ausführungsbeispiel ist ein Messobjekt in einer Entfernung zwischen dem 0,8- bis 2-fachen der Brennweite der Linsengruppe 1 angeordnet. Die erste Linsengruppe besitzt eine positive Brechkraft. Die zweite Linsengruppe besitzt eine negative Brechkraft. Die dritte Linsengruppe besitzt eine positive Brechkraft, und die vierte Linsengruppe wieder eine negative Brechkraft. Die zweite, dritte und vierte Linsengruppe sind jeweils achromatisch korrigiert, während die erste Linsengruppe einen definierten chromatischen Längsfehler erzeugt. Die Blende 52 befindet sich jeweils im bildseitigen Brennpunkt des aus der ersten und zweiten Linsengruppe gebildeten Teilsystems. Eine entsprechende Steuerkurve für die axiale Position der Blende 52 gewährleistet eine objektseitige Telezentrie. Die Änderung des Blendendurchmessers gestattet eine an die jeweilige Vergrößerung und Objektstruktur angepasste objektseitige Apertur. Das von der ersten und zweiten Linsengruppe entworfene virtuelle Bild wird von der dritten und vierten Linsengruppe an einen definierten Ort abgebildet, der in einem definierten festen Abstand zu der ersten Linsengruppe angeordnet ist. An diesem definierten Ort befindet sich in den bevorzugten Ausführungsbeispielen der Bildsensor 36.

Die optionale fünfte Linsengruppe transformiert das Bild um einen konstanten Betrag mit einem skalaren Anteil an der Gesamtvergrößerung. Die Gesamtvergrößerung ist in den bevorzugten Ausführungsbeispielen reell ohne Zwischenbild. Die Auslegung des Systems sichert über den Gesamtvergrößerungsbereich eine Austrittspupillenlage bezogen auf das Bild nach der vierten Linsengruppe zwischen der halben und doppelten Entfernung zum Messobjekt. Dies ist vorteilhaft, um auch ohne eine strenge bildseitige Telezentrie Beleuchtungslicht verlustarm in das Objektiv 43 über die Schnittstelle 72 und/oder die Schnittstelle 35 einkoppeln zu können.

Die Brennweite des aus der ersten und zweiten Linsengruppe gebildeten Teilsystems wächst zu größeren Objektfeldern und führt die Blende 52 den in Richtung des Bildsensors 36 wandernden Linsengruppen nach. Dabei sind die Strahlhöhen an der dritten und vierten Linsengruppe aufgrund der Blende begrenzt, was eine gute Gesamtkorrektion der Abbildung ermöglicht. Das Gesamtsystem ist durch die paraxialen Grunddaten Vergrößerung, Fokussierung, Telezentrie und numerische Apertur unterbestimmt. Mit Hilfe der Steuerkurve für die axiale Position der Blende ist es möglich, eine ausgewogene Korrektur der Bildfehler über einen großen Verstellbereich der Vergrößerung zu erreichen. In einigen Ausführungsbeispielen ist das Verhältnis zwischen maximaler Vergrößerung und minimaler Vergrößerung größer als 10 und vorzugsweise größer als 15.

In den bevorzugten Ausführungsbeispielen kann das Objektiv 43 chromatische Querfehler aufweisen, um einen einfachen und kostengünstigen Aufbau zu ermöglichen. Dies hat zur Folge, dass Licht und Bilder unterschiedlicher Farben einen geringen Versatz quer zur optischen Achse 50 aufweisen können. In bevorzugten Ausführungsbeispielen wird der chromatische Querfehler anhand von mathematischen Korrekturrechnungen korrigiert, was in den bevorzugten Ausführungsbeispielen möglich ist, weil das Fehlerbild als solches stetig ist.

In einigen Ausführungsbeispielen des Objektivs 43 sind der Strahlteiler 64 und das Deckglas 38 so ausgebildet, dass eine polarisationsoptische Unterdrückung von Falschlicht erreicht wird. Dazu ist der Strahlteiler 64 als polarisierender Strahlteiler ausgebildet, und das Deckglas 38 ist eine λ/4-Platte. Auf diese Weise wird Licht, das zum Beispiel durch interne Reflexe im Objektivkörper entsteht, vom Strahlteiler 64 abgelenkt. Nur Licht, das mit Hin- und Rückweg durch die λ/4-Platte gegangen ist, wurde in der Polarisationsrichtung jeweils um 45° gedreht und kann nun den Strahlteiler 64 durch die insgesamt 90° gedrehte Polarisationsrichtung in Richtung der Kamera 34 passieren.

In bevorzugten Ausführungsbeispielen sind Fassungsteile der Linsengruppen geschwärzt, und die Linsengrenzflächen sind mit Antireflexbeschichtungen versehen. Grenzflächen von benachbarten Linsen sind so weit wie möglich verkittet. Die einzelnen Baugruppen sind gewichtsoptimiert, um schnelle Bewegungen der verfahrbaren Linsengruppen und Blende zu ermöglichen.

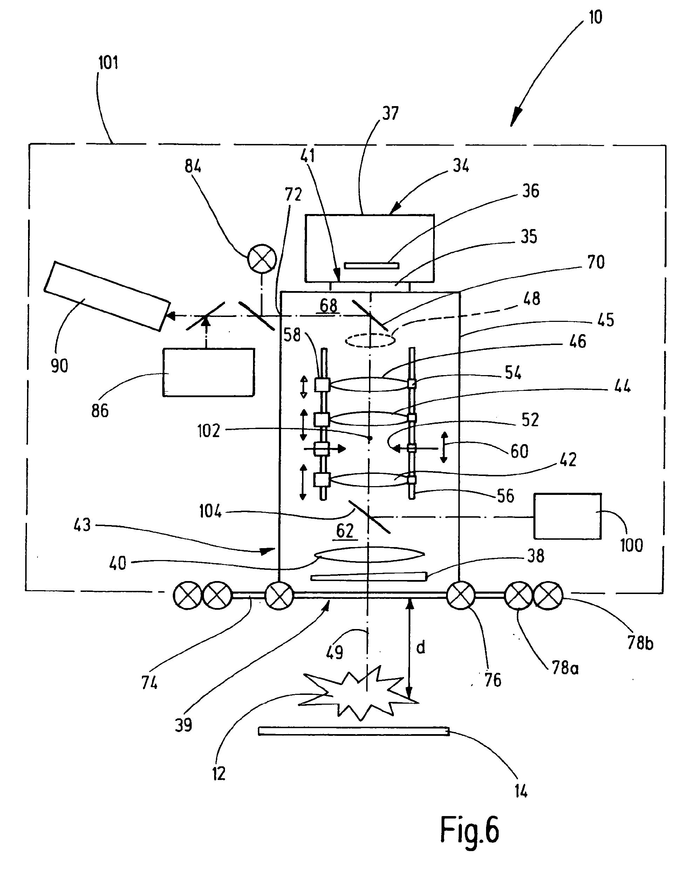

Die Fig. 6 zeigt ein erfindungsgemäßes Ausführungsbeispiel einer Vorrichtung 10. Gleiche Elemente wie in der Fig. 2 sind dabei mit gleichen Bezugszeichen gekennzeichnet und werden im Folgenden nicht erneut erläutert.

Eine Kalibrieranordnung 100 ist innerhalb eines Gehäuses 101 der Vorrichtung 10 angeordnet.

Um mittels der Kamera 34 ein Bild der Kalibrieranordnung 100 aufzunehmen, ist ein Reflexionselement 104 in einen Strahlengang 102 des Objektivs 43 eingebracht. Auf diese Weise wird die Kalibrieranordnung 100 optisch koaxial mit einer optischen Achse 50 der Linsengruppen des Objektivs 43 mittels des Reflexionselements 104 eingekoppelt. Die Kamera 34 kann die Kalibrieranordnung 100 somit über das Reflexionselement 104 beobachten. Die beleuchtete Kalibrieranordnung 100 wird somit über das Reflexionselement 104 und die bildseitig des Reflexionselements 104 angeordneten Linsengruppen 42, 44, 46, 48 auf die Kamera 34 abgebildet.

Es kann vorgesehen sein, dass die Kalibrieranordnung 100 feststehend ausgebildet ist und lediglich das Reflexionselement 104 in den Strahlengang 102 bewegt wird. Es aber auch denkbar, dass das Reflexionselement 104 und die Kalibrieranordnung 100 eine gemeinsam bewegte Einheit bilden, die bei dem Bewegen des Reflexionselements 104 in den Strahlengang 102 insgesamt bewegt wird.

Bei dem Reflexionselement 104 kann es sich bspw. um die Rückseite des in der Fig. 2 dargestellten Strahlteilers 64 handeln.

Das Reflexionselement 104 ist in den Freiraum 62 zwischen der ersten Linsengruppe 40 und der zweiten Linsengruppe 42 einbringbar. Auf diese Weise wird es möglich, durch wahlweises Einbringen des Reflexionselements 104 automatisch einen Kalibriervorgang zu initiieren, bei dem anstatt eines tatsächlich auf den Werkstückträger 14 aufgebrachten Kalibriernormals der Kalibrieranordnung 100, die innerhalb des Gehäuses 101 der Vorrichtung 10 angeordnet ist, zur Kalibration genutzt wird.

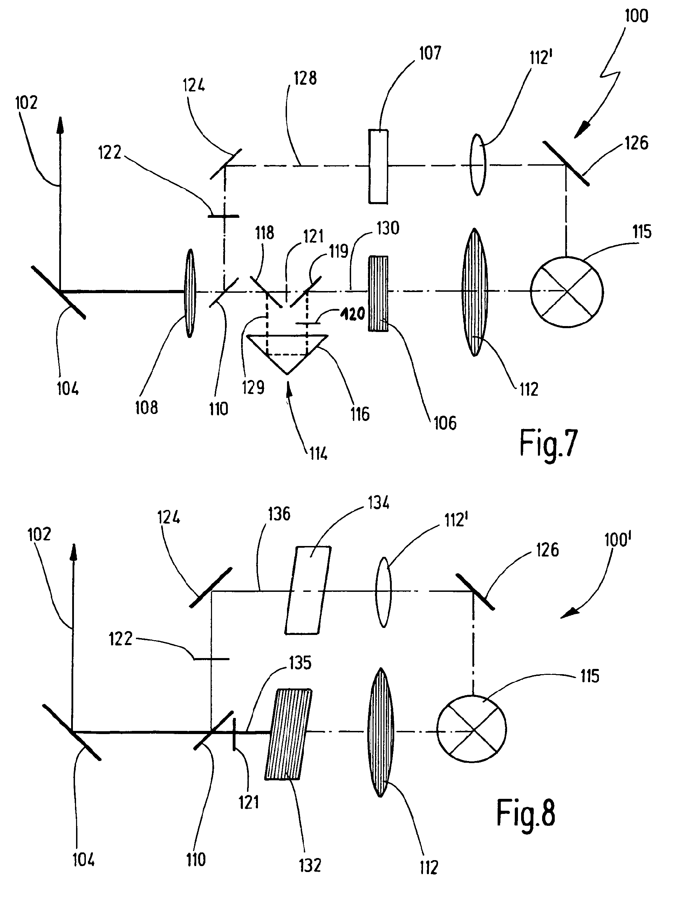

In der Fig. 7 ist ein erstes Ausführungsbeispiel der Kalibrieranordnung 100 dargestellt.

Grundsätzlich kann die Kalibrieranordnung ein reales Kalibrierobjekt 106 aufweisen. In diesem Fall wird die Kalibrieranordnung 100 dann des Weiteren eine Kalibrierlinsenbaugruppe 108 aufweisen, deren optische Eigenschaften der der objektseitig angeordneten Linsengruppen des Objektivs 43 entsprechen, wobei "objektseitig" damit in dem in Fig. 6 dargestellten Beispiel die Linsengruppe 40 bezeichnet. Auf diese Weise ist es somit möglich, mittels der Kamera 34 das reale Kalibrierobjekt 106 zu betrachten, und als ob man einen tatsächlich auf dem Werkstückträger 14 platziertes Kalibriernormal betrachten würde. Dies kommt daher, da die optischen Eigenschaften der Kalibrierlinsenbaugruppe 108 der der ersten Linsengruppe 40 entsprechen. Eine Beleuchtung des realen Kalibrierobjekts 106 kann entweder mittels der Auflichtbeleuchtungseinrichtung 84 erfolgen oder mittels einer Beleuchtungseinrichtung 115, die ein Element der Kalibrieranordnung 100 ist. Eine Strahlformungsbaugruppe 112 kann vorgesehen sein, die das Licht der Beleuchtungseinrichtung 115 geeignet auf das reale Kalibrierobjekt 106 formt.

Um die Kalibrieranordnung 100 möglichst platzsparend ausführen zu können, ist eine Verzögerungsstrecke 114 vorgesehen. Unter Umständen kann der Arbeitsabstand d zu groß sein, um ihn in linearer Ausdehnung in der Kalibrieranordnung 100 auszubilden. Es kann auch vorgesehen sein, dass die Vorrichtung in mehreren Arbeitsabständen betrieben werden kann, die dann mittels der Verzögerungsstrecke 114 wahlweise zwischen der Kalibrierlinsenbaugruppe 108 und dem Kalibrierobjekt 106 gleichzeitig oder alternativ geschaltet werden können. Hierzu ist die Verzögerungsstrecke mittels zweier Verzögerungsstrahlteiler 118, 119 und beispielhaft mittels eines Prismas 116 ausgebildet, so dass eine Umlenkung des Strahlengangs zwischen Kalibrierlinsenbaugruppe 108 und realem Kalibrierobjekt 106 möglich ist. Es können Shutterelemente 120, 121 vorgesehen sein, um wahlweise den Strahlengang direkt von der Kalibrierlinsenbaugruppe 108 auf das reale Kalibrierobjekt 106, der mit dem Bezugszeichen 130 bezeichnet ist, oder ein Strahlengang 129 durch die Verzögerungsstrecke 114 optisch zu sperren.

Alternativ oder kumulativ kann auch ein weiteres reales Kalibrierobjekt 107 vorgesehen sein, das ebenfalls mittels der Beleuchtungseinrichtung 115 über ein Spiegelelement 126 und eine weitere Strahlformungsbaugruppe 112' beleuchtet sein kann. Alternativ kann auch die Beleuchtung mittels der Auflichtbeleuchtungseinrichtung 84 durchgeführt werden. Mittels eines Kalibrierstrahlteilers 110 und bspw. über ein weiteres Spiegelelement 124 kann ein Strahlengang 128 von dem weiteren realen Kalibrierobjekt 107 auf den Strahlengang 130 des realen Kalibrierobjekts 106 überlagert werden. Auf diese Weise können mehrere Arbeitsabstände gleichzeitig oder wahlweise in der Kalibrieranordnung 100 geschaltet werden. Auch in dem Strahlengang 128 kann hierzu ein weiteres Shutterelement 122 vorgesehen sein.

In der Fig. 8 ist ein weiteres Ausführungsbeispiel für eine Kalibrieranordnung 100' dargestellt.

Gleiche Elemente wie in der Fig. 7 sind daher mit gleichen Bezugszeichen gekennzeichnet und werden nicht näher erläutert. Im Folgenden wird lediglich auf die Unterschiede eingegangen.

Statt Kalibrierobjekte 106, 107 ist in der Fig. 8 dargestellten Ausführungsform mindestens ein holografisches optisches Element 132 vorgesehen. Dieses wird beleuchtet und erzeugt ein optisches Feld, die dem eines Strahlengangs eines Kalibriernormals durch die Linsengruppen objektseitig des Reflexionselements 104 entspricht. Sind objektseitig des Reflexionselements 104 keine Linsengruppen in der Vorrichtung 10 vorgesehen, entspricht es demgemäß dem Strahlengang eines Kalibriernormals mit einem entsprechenden Arbeitsabstand. Ein optisches Bildspeicherelement 132 kann als Hologramm oder mittels eines diffraktiven optischen Elements bereitgestellt sein. Auf dem optischen Bildspeicherelement 132 können auch mehrere optische Felder gespeichert sein, die durch Beleuchtung mit unterschiedlichen Winkeln und/oder mit unterschiedlichen Wellenlängen ausgelesen und über das Reflexionselement 104 über den Strahlengang 102 auf die Kamera 34 abgebildet werden können. So würde es auf diese Weise auch möglich, optische Felder mehrerer Arbeitsabstände auf einem optischen Bildspeicherelement 132, insbesondere einem holografischen optischen Element, zu speichern. Alternativ oder kumulativ kann jedoch auch vorgesehen sein, dass über ein Kalibrierstrahlteiler 110 weitere optische Bildspeicherelemente, insbesondere holografische optische Elemente 134 ausgelesen und auf die Kamera 34 abgebildet werden können. Hierzu werden ein Strahlengang 136 des weiteren optischen Bildspeicherelements 134 und ein Strahlengang 135 des optischen Bildspeicherelements 132 mittels des Kalibrierstrahlteilers 110 überlagert. Auch in dem Ausführungsbeispiel der Kalibrieranordnung 100' können Shutterelemente 121, 122 vorgesehen sein, um die Strahlengänge 135, 136 wahlweise optisch zu blockieren.

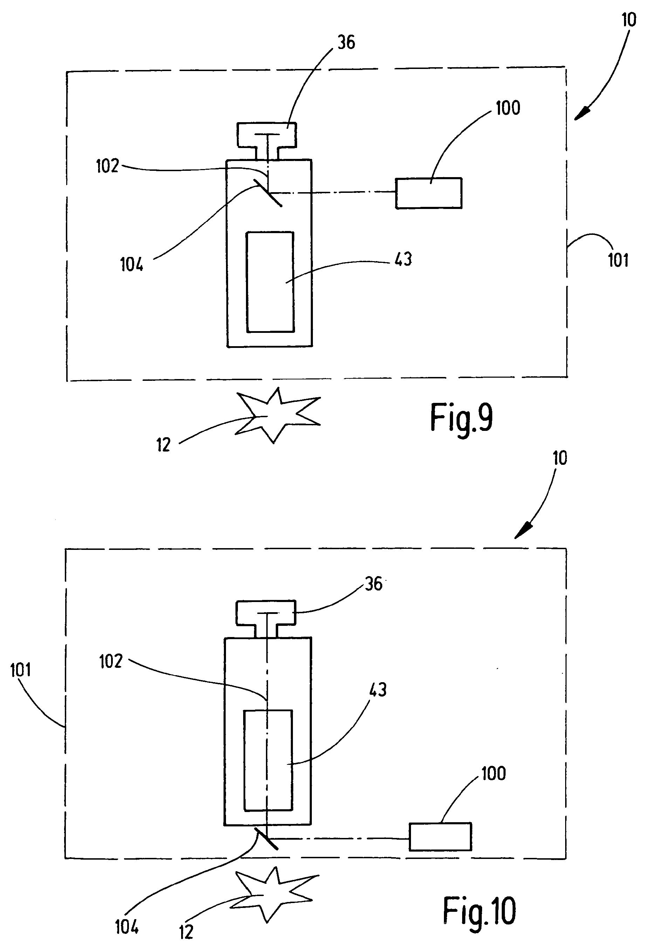

In der Fig. 9 ist schematisch dargestellt, dass die Kalibrieranordnung grundsätzlich auch bildseitig aller Linsengruppen 40 bis 48 des Objektivs 43 bzw. bildseitig des Objektivs 43 mittels des Reflexionselements 104 eingekoppelt sein kann. Beispielsweise kann auf diese Weise auch eine Auflichtbeleuchtungseinrichtung 84, etwa in ihrem Emissionsspektrum, getestet werden oder aber bspw. ein Autofokussensor 90 mit einer zugehörigen Gitterbeleuchtung 86. Des Weiteren kann so die Maßstabstabilität der Kamera mit ihren einzelnen Detektorelementen getestet werden, da darüber die spätere Maßverkörperung in der Messung erreicht wird.

In der Fig. 10 ist schematisch dargestellt, das die Kalibrieranordnung 100 grundsätzlich auch objektseitig aller Linsengruppe 40 bis 48 des Objektivs 43 bzw. objektseitig des Objektivs 43 angeordnet sein können. Der Strahlengang 102 verläuft dann von dem Reflexionselement 104 durch das gesamte Objektiv 43 auf die Kamera 34. In diesem Falle ist keine Kalibrierlinsenbaugruppe 108 notwendig. Sowohl in der Ausführungsbeispiel in der Fig. 9 als auch in dem Ausführungsbeispiel der Fig. 10 kann vorgesehen sein, dass die Kalibrieranordnung 100 innerhalb des Gehäuses 101 der Vorrichtung 10 angeordnet ist.

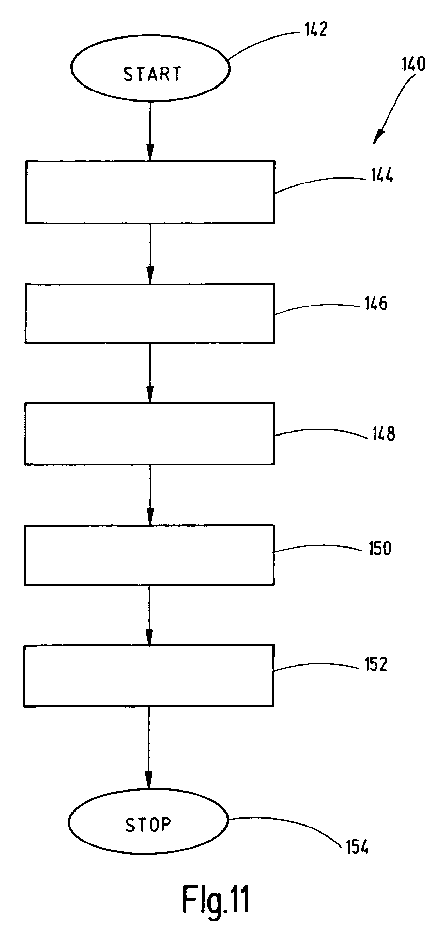

Fig. 11 zeigt schematisch ein Ablaufdiagramm einer Ausführungsform eines Verfahrens zum Kalibrieren der Vorrichtung 10 zum Inspizieren des Messobjekts 12.

Das Verfahren beginnt mit einem Startschritt 142. In einem Schritt 141 wird dann zunächst die Vorrichtung 10 bereitgestellt, die einen optischen Sensor 18 tragenden Messkopf 15 aufweist, wobei der optische Sensor 18 ein Objektiv 43 und eine Kamera 34 aufweist, die dazu ausgebildet ist, ein Bild des Messobjekts 12 durch das Objektiv 43 aufzunehmen, wobei das Objektiv 43 eine Lichteintrittsöffnung 39 und eine Lichtaustrittsöffnung 41 aufweist, wobei das Objektiv 43 eine Vielzahl von Linsengruppen 40, 42, 44, 46, 48 aufweist, die in dem Objektiv 43 zwischen der Lichteintrittsöffnung 39 und der Lichtaustrittsöffnung 41 hintereinander entlang einer Längsachse 49 des Objektivs 43 angeordnet sind, und wobei die Vorrichtung 10 des Weiteren ein Reflexionselement 104 und eine Kalibrieranordnung 100 aufweist.

Nach einem Schritt 146 wird dann das Reflexionselement in einem durch das Objektiv auf die Kamera verlaufenden Strahlengang 102 eingebracht, wie dies voranstehend beschrieben wurde. Dadurch wird die Kalibrieranordnung 100 mittels des Reflexionselements 104 in den Strahlengang 102 auf die Kamera 34 eingekoppelt.

Nunmehr wird die Kalibrieranordnung 100 in einem Schritt 148 beleuchtet. Dies kann mittels der Auflichtbeleuchtungseinrichtung 84 oder der Beleuchtungseinrichtung 115 der Kalibrieranordnung 100 erfolgen.

Mit der Kamera 34 werden nun in einem Schritt 150 Kalibrierbilder erfasst. Diese Kalibrierbilder nehmen eine Abbildung eines realen Kalibrierobjekts 106, 107 oder das optische Feld auf, das aus einem der optischen Bildspeicherelemente 132, 134 ausgelesen wird.

Mittels aufgenommener Kalibrierbilder kann nun in einem Schritt 152 ein Kalibrieren der Vorrichtung 10, insbesondere der Steuerkurven der Vorrichtung 10 für die bewegbaren optischen Elemente 42, 44, 46, und die der bewegbaren Blende 52, durch Auswerten der Kalibrierbilder erfolgen.

Das Kalibrierverfahren endet dann in einem Schritt 154.

## Patentansprüche

1. Vorrichtung (10) zum Inspizieren eines Messobjekts (12), mit einer Werkstückaufnahme (14) zur Aufnahme des Messobjekts (12), mit einem einen optischen Sensor (18) tragenden Messkopf (15), wobei der Messkopf (15) und die Werkstückaufnahme (12) relativ zueinander verfahrbar sind, wobei der optische Sensor (18) ein Objektiv (43) und eine Kamera (34) aufweist, die dazu ausgebildet ist, ein Bild des Messobjekts (12) durch das Objektiv (43) aufzunehmen, wobei das Objektiv (43) eine Lichteintrittsöffnung (39) und eine Lichtaustrittsöffnung (41) aufweist, wobei das Objektiv (43) eine Vielzahl von Linsengruppen (40, 42, 44, 46, 48) aufweist, die in dem Objektiv (43) zwischen der Lichteintrittsöffnung (39) und der Lichtaustrittsöffnung (41) hintereinander entlang einer Längsachse (49) des Objektivs (43) angeordnet sind, und **dadurch gekennzeichnet, dass** die Vorrichtung (10) des Weiteren ein Reflexionselement (104) und eine Kalibrieranordnung (100) aufweist, wobei das Reflexionselement (104) in einen durch das Objektiv (43) auf die Kamera (36) verlaufenden Strahlengang (102) einbringbar ist, um die Kalibrieranordnung (100) mittels des Reflexionselements (104) in den Strahlengang (102) auf die Kamera (36) einzukoppeln.

2. Vorrichtung nach Anspruch 1, **dadurch gekennzeichnet, dass** das Reflexionselement (104) zwischen zwei Linsengruppen (40, 42) der Vielzahl von Linsengruppen (40, 42, 44, 46, 48) in den Strahlengang (102) einbringbar ist.

3. Vorrichtung nach Anspruch 1 oder 2, **dadurch gekennzeichnet, dass** die Vielzahl von Linsengruppen (40, 42, 44, 46, 48) mindestens eine parallel zu der Längsrichtung (49) bewegbare Linsengruppe (42, 44, 46, 48) aufweist, und wobei das Reflexionselement (104) objektseitig aller parallel zu der Längsrichtung (49) bewegbaren Linsengruppen (42, 44, 46, 48) in den Strahlengang (102) einbringbar ist.

4. Vorrichtung nach einem der Ansprüche 1 bis 3, **dadurch gekennzeichnet, dass** die Kalibrieranordnung (100) mindestens ein reales Kalibrierobjekt (106, 107)) aufweist.

5. Vorrichtung nach Anspruch 4, **dadurch gekennzeichnet, dass** die Kalibrieranordnung (100) eine Kalibrierlinsenbaugruppe (108) aufweist, wobei die Kalibrierlinsenbaugruppe (108) in ihren optischen Eigenschaften den objektseitig des Reflexionselements (104) angeordneten Linsengruppen (40, 42, 44, 46, 48) entspricht.

6. Vorrichtung nach Anspruch 4 oder 5, **dadurch gekennzeichnet, dass** die Kalibrieranordnung (100) mehrere reale Kalibrierobjekte (106, 107) aufweist, wobei die Kalibrieranordnung (100) mindestens einen Kalibrierstrahlteiler (110) aufweist, und wobei der mindestens eine Kalibrierstrahlteiler (110) derart angeordnet ist, dass die Strahlengänge (128, 130) aller realen Kalibrierobjekte (106, 107) auf das Reflexionselement (104) überlagert sind.

7. Vorrichtung nach einem der Ansprüche 4 bis 6, **dadurch gekennzeichnet, dass** in dem Strahlengang (130) des mindestens einen realen Kalibrierobjekts (106) eine Verzögerungsstrecke (114) mittels zweier Verzögerungsstrahlteiler (118, 119) eingekoppelt ist.

8. Vorrichtung nach Anspruch 6 oder 7, **dadurch gekennzeichnet, dass** in jedem Strahlengang (128, 129, 130) zu einem realen Kalibrierobjekt (106, 107) oder in der optischen Verzögerungsstrecke (114) ein Shutterelement (120, 121, 122) angeordnet ist, um den entsprechenden Strahlengang (128, 129, 130) wahlweise zu blockieren.

9. Vorrichtung nach einem der Ansprüche 1 bis 3, **dadurch gekennzeichnet, dass** die Kalibrieranordnung (100) mindestens ein optisches Bildspeicherelement (132, 134) aufweist, wobei das optische Bildspeicherelement (132, 134) ein holografisches optisches Element oder ein diffraktives optisches Element ist.

10. Vorrichtung nach Anspruch 9, **dadurch gekennzeichnet, dass** auf dem optischen Bildspeicherelement (132, 134) ein optisches Feld gespeichert ist, das dem eines objektseitig des Reflexionselements angeordneten Kalibrierobjekts entspricht.

11. Vorrichtung nach Anspruch 10, **dadurch gekennzeichnet, dass** die Kalibrieranordnung (100) ein optisches Bildspeicherelement (132, 134) aufweist, das ein holografisches optisches Element oder ein diffraktives optisches Element ist, wobei auf dem optischen Bildspeicherelement (132, 134) eine Mehrzahl optischer Felder wellenlängenabhängig und/oder beleuchtungswinkelabhängig gespeichert ist.

12. Vorrichtung nach Anspruch 10 oder 11, **dadurch gekennzeichnet, dass** die Kalibrieranordnung (100) mehrere optische Bildspeicherelemente (132, 134) aufweist, wobei die Kalibrieranordnung (100) mindestens einen Kalibrierstrahlteiler (110) aufweist, und wobei der mindestens eine Kalibrierstrahlteiler (110) derart angeordnet ist, dass die Strahlengänge aller optischen Bildspeicherelemente (132, 134) auf das Reflexionselement (104) überlagert sind.

13. Vorrichtung nach einem der Ansprüche 1 bis 12, **dadurch gekennzeichnet, dass** das Objektiv (43) eine Blende (52) und mindestens vier Linsengruppen (40, 42, 44, 46, 48) aufweist, dass eine erste Linsengruppe (40) die am weitesten objektseitig angeordnete Linsengruppe ist und feststehend ausgebildet ist, dass mindestens eine zweite Linsengruppe (42) und eine dritte Linsengruppe (44) relativ zu der ersten Linsengruppe (40) entlang der Längsachse (49) verschiebbar sind, und dass das Reflexionselement (104) zwischen die erste Linsengruppe (40) und die zweite Linsengruppe (42) einbringbar ist.

14. Vorrichtung nach Anspruch 13, **dadurch gekennzeichnet, dass** eine Blende (52) und die zweite Linsengruppe (42), die dritte Linsengruppe (44) und eine vierte Linsengruppe (46) von den mindestens vier Linsengruppen relativ zu der ersten Linsengruppe (40) entlang der Längsachse (49) verschiebbar sind, wobei die zweite Linsengruppe (42) zwischen der ersten Linsengruppe (40) und der Blende (52) angeordnet ist, und wobei die dritte und die vierte Linsengruppe (44, 46) zwischen der Blende (52) und der Lichtaustrittsöffnung (30) angeordnet sind.

15. Vorrichtung nach einem der Ansprüche 1 bis 14, **dadurch gekennzeichnet, dass** mindestens zwei Linsengruppen (40, 42, 44, 46, 48) parallel zu der Längsachse (49) verschiebbar sind.

16. Vorrichtung nach Anspruch 1 oder einem der Ansprüche 4 bis 15, **dadurch gekennzeichnet, dass** das Reflexionselement (104) bildseitig oder objektseitig der Vielzahl von Linsengruppen (40, 42, 44, 46, 48) in den Strahlengang (102) einbringbar ist.

17. Vorrichtung nach einem der Ansprüche 1 bis 16, **dadurch gekennzeichnet, dass** die Kalibrieranordnung (100) innerhalb eines Gehäuses (101) der Vorrichtung (10) angeordnet ist.

18. Verfahren (140) zum Kalibrieren einer Vorrichtung (10) zum Inspizieren eines Messobjekts (12), mit den folgenden Schritten:
- Bereitstellen (144) einer Vorrichtung (10) mit einem einen optischen Sensor (18) tragenden Messkopf (15), wobei der optische Sensor (18) ein Objektiv (43) und eine Kamera (34) aufweist, die dazu ausgebildet ist, ein Bild des Messobjekts (12) durch das Objektiv (43) aufzunehmen, wobei das Objektiv (43) eine Lichteintrittsöffnung (39) und eine Lichtaustrittsöffnung (41) aufweist, wobei das Objektiv (43) eine Vielzahl von Linsengruppen (40, 42, 44, 46, 48) aufweist, die in dem Objektiv (43) zwischen der Lichteintrittsöffnung (39) und der Lichtaustrittsöffnung (41) hintereinander entlang einer Längsachse (49) des Objektivs (43) angeordnet sind, und wobei die Vorrichtung (10) des Weiteren ein Reflexionselement (104) und eine Kalibrieranordnung (100) aufweist,
- Einbringen (146) des Reflexionselements in einen durch das Objektiv (43) auf die Kamera (36) verlaufenden Strahlengang (102), wobei dadurch die Kalibrieranordnung (100) mittels des Reflexionselements (104) in den Strahlengang (102) auf die Kamera (36) eingekoppelt wird,
- Beleuchten (148) der Kalibrieranordnung (100),
- Erfassen (150) von Kalibrierbildern mittels der Kamera (36), und
- Kalibrieren (152) der Vorrichtung (10) durch Auswerten der Kalibrierbilder.

## Claims

1. Apparatus (10) for inspecting a measurement object (12), comprising a workpiece receptacle (14) for receiving the measurement object (12), comprising a measuring head (15) carrying an optical sensor (18), wherein the measuring head (15) and the workpiece receptacle (12) are movable relative to one another, wherein the optical sensor (18) has a lens (43) and a camera (34), which is designed to capture an image of the measurement object (12) through the lens (43), wherein the lens (43) has a light entrance opening (39) and a light exit opening (41), wherein the lens (43) has a multiplicity of lens-element groups (40, 42, 44, 46, 48) which are arranged in the lens (43) between the light entrance opening (39) and the light exit opening (41) one behind another along a longitudinal axis (49) of the lens (43), and **characterized in that** the apparatus (10) furthermore has a reflection element (104) and a calibration arrangement (100), wherein the reflection element (104) can be introduced into a beam path (102) running through the lens (43) to the camera (36), in order to couple the calibration arrangement (100) into the beam path (102) to the camera (36) by means of the reflection element (104).

2. Apparatus according to Claim 1, **characterized in that** the reflection element (104) can be introduced into the beam path (102) between two lens-element groups (40, 42) of the multiplicity of lens-element groups (40, 42, 44, 46, 48).

3. Apparatus according to Claim 1 or 2, **characterized in that** the multiplicity of lens-element groups (40, 42, 44, 46, 48) comprises at least one lens-element group (42, 44, 46, 48) which is movable parallel to the longitudinal direction (49), and wherein the reflection element (104) can be introduced into the beam path (102) on the object side of all lens-element groups (42, 44, 46, 48) which are movable parallel to the longitudinal direction (49).

4. Apparatus according to any of Claims 1 to 3, **characterized in that** the calibration arrangement (100) has at least one real calibration object (106, 107).

5. Apparatus according to Claim 4, **characterized in that** the calibration arrangement (100) has a calibration lens-element assembly (108), wherein the calibration lens-element assembly (108) corresponds in terms of its optical properties to the lens-element groups (40, 42, 44, 46, 48) arranged on the object side of the reflection element (104).

6. Apparatus according to Claim 4 or 5, **characterized in that** the calibration arrangement (100) has a plurality of real calibration objects (106, 107), wherein the calibration arrangement (100) has at least one calibration beam splitter (110), and wherein the at least one calibration beam splitter (110) is arranged in such a way that the beam paths (128, 130) of all the real calibration objects (106, 107) are superimposed onto the reflection element (104).

7. Apparatus according to any of Claims 4 to 6, **characterized in that** in the beam path (130) of the at least one real calibration object (106) a retardation section (114) is coupled in by means of two retardation beam splitters (118, 119).

8. Apparatus according to Claim 6 or 7, **characterized in that** a shutter element (120, 121, 122) is arranged in each beam path (128, 129, 130) to a real calibration object (106, 107) or in the optical retardation section (114), in order optionally to block the corresponding beam path (128, 129, 130).

9. Apparatus according to any of Claims 1 to 3, **characterized in that** the calibration arrangement (100) has at least one optical image storage element (132, 134), wherein the optical image storage element (132, 134) is a holographic optical element or a diffractive optical element.

10. Apparatus according to Claim 9, **characterized in that** an optical field corresponding to that of a calibration object arranged on the object side of the reflection element is stored on the optical image storage element (132, 134).

11. Apparatus according to Claim 10, **characterized in that** the calibration arrangement (100) has an optical image storage element (132, 134) that is a holographic optical element or a diffractive optical element, wherein a plurality of optical fields are stored on the optical image storage element (132, 134) in a wavelength-dependent manner and/or in an illumination-angle-dependent manner.

12. Apparatus according to Claim 10 or 11, **characterized in that** the calibration arrangement (100) has a plurality of optical image storage elements (132, 134), wherein the calibration arrangement (100) has at least one calibration beam splitter (110), and wherein the at least one calibration beam splitter (110) is arranged in such a way that the beam paths of all the optical image storage elements (132, 134) are superimposed onto the reflection element (104).

13. Apparatus according to any of Claims 1 to 12, **characterized in that** the lens (43) has a diaphragm (52) and at least four lens-element groups (40, 42, 44, 46, 48), **in that** a first lens-element group (40) is the lens-element group arranged the furthest on the object side and is embodied in a stationary fashion, **in that** at least a second lens-element group (42) and a third lens-element group (44) are displaceable relative to the first lens-element group (40) along the longitudinal axis (49), and **in that** the reflection element (104) can be introduced between the first lens-element group (40) and the second lens-element group (42).

14. Apparatus according to Claim 13, **characterized in that** a diaphragm (52) and the second lens-element group (42), the third lens-element group (44) and a fourth lens-element group (46) from the at least four lens-element groups are displaceable relative to the first lens-element group (40) along the longitudinal axis (49), wherein the second lens-element group (42) is arranged between the first lens-element group (40) and the diaphragm (52), and wherein the third and fourth lens-element group (44, 46) are arranged between the diaphragm (52) and the light exit opening (30).

15. Apparatus according to any of Claims 1 to 14, **characterized in that** at least two lens-element groups (40, 42, 44, 46, 48) are displaceable parallel to the longitudinal axis (49).

16. Apparatus according to Claim 1 or any of Claims 4 to 15, **characterized in that** the reflection element (104) can be introduced into the beam path (102) on the image side or on the object side of the multiplicity of lens-element groups (40, 42, 44, 46, 48).

17. Apparatus according to any of Claims 1 to 16, **characterized in that** the calibration arrangement (100) is arranged within a housing (101) of the apparatus (10).

18. Method (140) for calibrating an apparatus (10) for inspecting a measurement object (12), comprising the following steps:
- providing (144) an apparatus (10) comprising a measuring head (15) carrying an optical sensor (18), wherein the optical sensor (18) has a lens (43) and a camera (34), which is designed to capture an image of the measurement object (12) through the lens (43), wherein the lens (43) has a light entrance opening (39) and a light exit opening (41), wherein the lens (43) has a multiplicity of lens-element groups (40, 42, 44, 46, 48) which are arranged in the lens (43) between the light entrance opening (39) and the light exit opening (41) one behind another along a longitudinal axis (49) of the lens (43), and wherein the apparatus (10) furthermore has a reflection element (104) and a calibration arrangement (100),
- introducing (146) the reflection element into a beam path (102) running through the lens (43) to the camera (36), wherein the calibration arrangement (100) is thereby coupled into the beam path (102) to the camera (36) by means of the reflection element (104),
- illuminating (148) the calibration arrangement (100),
- detecting (150) calibration images by means of the camera (36), and
- calibrating (152) the apparatus (10) by evaluating the calibration images.

## Revendications

1. Dispositif (10) destiné à inspecter un objet à mesurer (12), avec un porte-pièces (14) pour réceptionner l'objet à mesurer (12), avec une tête de mesure (15) portant un capteur optique (18), la tête de mesure (15) et le porte-pièces (12) étant déplaçables l'un par rapport à l'autre, le capteur optique (18) comportant un objectif (43) et une caméra (34) qui est conçue pour enregistrer une image de l'objet à mesurer (12) à travers l'objectif (43), l'objectif (43) comportant un orifice d'entrée (39) de la lumière et un orifice de sortie (41) de la lumière, l'objectif (43) comportant une pluralité de groupes de lentilles (40, 42, 44, 46, 48) qui sont placés dans l'objectif (43), les uns derrière les autres, le long d'un axe longitudinal (49) de l'objectif (43), entre l'orifice d'entrée (39) de la lumière et l'orifice de sortie (41) de la lumière et **caractérisé en ce que** le dispositif (10) comporte par ailleurs un élément de réflexion (104) et un agencement de calibrage (100), l'élément de réflexion (104) pouvant être introduit dans un trajet de faisceau (102) s'étendant à travers l'objectif (43) vers la caméra (36), pour injecter l'agencement de calibrage (100) au moyen de l'élément de réflexion (104) dans le trajet de faisceau (102) vers la caméra (36).

2. Dispositif selon la revendication 1, **caractérisé en ce que** l'élément de réflexion (104) peut être introduit dans le trajet de faisceau (102), entre deux groupes de lentilles (40, 42) de la pluralité de groupes de lentilles (40, 42, 44, 46, 48).

3. Dispositif selon la revendication 1 ou la revendication 2, **caractérisé en ce que** la pluralité de groupes de lentilles (40, 42, 44, 46, 48) comporte au moins un groupe de lentilles (42, 44, 46, 48) déplaçable à la parallèle de la direction longitudinale (49) et l'élément de réflexion (104) pouvant être introduit dans le trajet de faisceau (102), du côté objet de tous les groupes de lentilles (42, 44, 46, 48) déplaçables à la parallèle de la direction longitudinale (49).

4. Dispositif selon l'une quelconque des revendications 1 à 3, **caractérisé en ce que** l'agencement de calibrage (100) comporte au moins un objet de calibrage (106, 107) réel.

5. Dispositif selon la revendication 4, **caractérisé en ce que** l'agencement de calibrage (100) comporte un ensemble de lentilles (108) de calibrage, l'ensemble de lentilles (108) de calibrage correspondant par ses caractéristiques optiques aux groupes de lentilles (40, 42, 44, 46, 48) placés côté objet de l'élément de réflexion (104).

6. Dispositif selon la revendication 4 ou la revendication 5, **caractérisé en ce que** l'agencement de calibrage (100) comporte plusieurs objets de calibrage (106, 107) réels, l'agencement de calibrage (100) comportant au moins un séparateur de faisceaux (110) de calibrage et l'au moins un séparateur de faisceaux (110) de calibrage (110) étant placé de telle sorte que les trajets de faisceaux (128, 130) de tous les objets de calibrage (106, 107) réels se superposent sur l'élément de réflexion (104).

7. Dispositif selon l'une quelconque des revendications 4 à 6, **caractérisé en ce que** dans le trajet de faisceau (130) de l'au moins un objet de calibrage (106) réel, une ligne de temporisation (114) est injectée au moyen de deux séparateurs de faisceaux (118, 119) de temporisation.

8. Dispositif selon la revendication 6 ou la revendication 7, **caractérisé en ce que** dans chaque trajet de faisceau (128, 129, 130) vers un objet de calibrage (106, 107) réel ou dans la ligne de temporisation (114) optique est placé un élément obturateur (120, 121, 122), pour bloquer au choix le trajet de - faisceau (128, 129, 130) correspondant.

9. Dispositif selon l'une quelconque des revendications 1 à 3, **caractérisé en ce que** l'agencement de calibrage (100) comporte au moins un élément optique de mémoire d'image (132, 134), l'élément optique de mémoire d'image (132, 134) étant un élément optique holographique ou un élément optique diffractif.

10. Dispositif selon la revendication 9, **caractérisé en ce que** sur l'élément optique de mémoire d'image (132, 134) est mémorisé un champ optique qui correspond à celui d'un objet de calibrage placé côté objet de l'élément de réflexion.

11. Dispositif selon la revendication 10, **caractérisé en ce que** l'agencement de calibrage (100) comporte un élément optique de mémoire d'image (132, 134), qui est un élément optique holographique ou un élément optique diffractif, sur l'élément optique de mémoire d'image (132, 134), une pluralité de champs optiques étant mémorisée en fonction de la longueur d'onde et/ou de l'angle d'éclairage.

12. Dispositif selon la revendication 10 ou la revendication 11, **caractérisé en ce que** l'agencement de calibrage (100) comporte plusieurs éléments optiques de mémoire d'image (132, 134), l'agencement de calibrage (100) comportant au moins un séparateur de faisceaux (110) de calibrage et l'au moins un séparateur de faisceaux (110) de calibrage étant placé de telle sorte que les trajets de faisceaux de tous les éléments optiques de mémoire d'image (132, 134) se superposent sur l'élément de réflexion (104).

13. Dispositif selon l'une quelconque des revendications 1 à 12, **caractérisé en ce que** l'objectif (43) comporte un diaphragme (52) et au moins quatre groupes de lentilles (40, 42, 44, 46, 48), **en ce qu'**un premier groupe de lentilles (40) est le groupe de lentilles placé le plus loin, côté objet, et conçu de façon fixe, **en ce qu'**au moins un deuxième groupe de lentilles (42) et un troisième groupe de lentilles (44) sont déplaçables par rapport au premier groupe de lentilles (40), le long de l'axe longitudinal (49) et **en ce que** l'élément de réflexion (104) peut être introduit entre le premier groupe de lentilles (40) et le deuxième groupe de lentilles (42).

14. Dispositif selon la revendication 13, **caractérisé en ce qu'**un diaphragme (52) et le deuxième groupe de lentilles (42), le troisième groupe de lentilles (44) et un quatrième groupe de lentilles (46) des au moins quatre groupes de lentilles sont déplaçables par rapport au premier groupe de lentilles (40), le long de l'axe longitudinal (49), le deuxième groupe de lentilles (42) étant placé entre le premier groupe de lentilles (40) et le diaphragme (52) et le troisième et le quatrième groupes de lentilles (44, 46) étant placés entre le diaphragme (52) et l'orifice de sortie (30) de lumière.

15. Dispositif selon l'une quelconque des revendications 1 à 14, **caractérisé en ce qu'**au moins deux groupes de lentilles (40, 42, 44, 46, 48) sont déplaçables à la parallèle de l'axe longitudinal (49).

16. Dispositif selon la revendication 1 ou l'une quelconque des revendications 4 à 15, **caractérisé en ce que** l'élément de réflexion (104) peut être introduit dans la trajet de faisceau (102), côté image ou côté objet de la pluralité de groupes de lentilles (40, 42, 44, 46, 48).

17. Dispositif selon l'une quelconque des revendications 1 à 16, **caractérisé en ce que** l'agencement de calibrage (100) est placé à l'intérieur d'un boîtier (101) du dispositif (10).

18. Procédé (140) de calibrage d'un dispositif (10) destiné à inspecter un objet à mesurer (12), avec les étapes suivantes :
- mise à disposition (144) d'un dispositif (10) avec une tête de mesure (15) portant un premier capteur optique (18), le capteur optique (18) comportant un objectif (43) et une caméra (34) qui est conçue pour enregistrer une image de l'objet à mesurer (12) à travers l'objectif (43), l'objectif (43) comportant un orifice d'entrée (39) de la lumière et un orifice de sortie (41) de la lumière, l'objectif (43) comportant une pluralité de groupes de lentilles (40, 42, 44, 46, 48), qui sont placés dans l'objectif (43), les uns derrière les autres, le long d'un axe longitudinal (49) de l'objectif (43), entre l'orifice d'entrée (39) de la lumière et l'orifice de sortie (41) de la lumière et le dispositif (10) comportant par ailleurs un élément de réflexion (104) et un agencement de calibrage (100),
- introduction (146) de l'élément de réflexion dans un trajet de faisceau (102) s'étendant à travers l'objectif (43) vers la caméra (36), de ce fait, l'agencement de calibrage (100) étant injecté dans le trajet de faisceau (102) vers la caméra (36), au moyen de l'élément de réflexion (104),
- éclairage (148) de l'agencement de calibrage (100),
- détection (150) d'images de calibrage au moyen de la caméra (36) et
- calibrage (152) du dispositif (10) par évaluation des images de calibrage.
